# EUROPÄISCHE PATENTSCHRIFT

(11) **EP 4 140 925 B1**
(45) Veröffentlichungstag und Bekanntmachung des Hinweises auf die Patenterteilung: **01.10.2025**
(21) Anmeldenummer: 22192309.7
(22) Anmeldetag: 26.08.2022
(51) Int. Cl.: B65G 60/00, B23Q 7/14, B65G 65/00

(54) **AUTOMATIONSMODUL, FERTIGUNGSSYSTEM SOWIE VERFAHREN ZUR BESCHICKUNG EINER WERKZEUGMASCHINE**
AUTOMATION MODULE, MANUFACTURING SYSTEM AND METHOD FOR LOADING A MACHINE TOOL
MODULE D'AUTOMATISATION, SYSTÈME DE PRODUCTION, AINSI QUE PROCÉDÉ DE CHARGEMENT D'UNE MACHINE-OUTIL

(30) Priorität: 30.08.2021 DE 102021122406
(43) Veröffentlichungstag der Anmeldung: 01.03.2023
(73) Patentinhaber: CHIRON Group SE, 78532 Tuttlingen (DE)
(72) Erfinder: Huber, Sebastian, 78573 Wurmlingen (DE); Kohler, Markus, 78194 Immendingen (DE)
(74) Vertreter: Witte, Weller & Partner Patentanwälte mbB

(56) Entgegenhaltungen:
- EP-A1- 1 645 529
- WO-A1-2006/042502
- CN-Y- 2 319 384
- JP-A- 2004 175 517

## Beschreibung

Die vorliegende Offenbarung bezieht sich auf ein Automationsmodul mit einer Stapelvorrichtung zur Handhabung von Ladehilfsmitteln zur automatisierten Beschickung einer Werkzeugmaschine, insbesondere für einen automatisierten Werkstückwechsel, mit einer Basis, einem Ständerwerk, das von der Basis gehalten ist und zumindest eine Vertikalführung trägt, ein erste Seite mit einem vertikal verfahrbaren Tragsegment zur Aufnahme eines Fördermittels, das zwei oder mehr übereinander angeordnete Ladehilfsmittel trägt, und einer zweiten Seite mit einer vertikal verfahrbaren Hubkonsole zur Aufnahme zumindest eines Ladehilfsmittels, wobei die Hubkonsole dazu ausgebildet ist, zwei oder mehr übereinander angeordnete Ladehilfsmittel zu tragen.

Die vorliegende Offenbarung bezieht sich ferner auf ein Fertigungssystem mit einem solchen Automatisierungsmodul. Schließlich bezieht sich die vorliegende Offenbarung auf ein Verfahren zur Beschickung einer Werkzeugmaschine.

Die WO 2006/042502 A1 offenbart ein Automatisierungsmodul nach dem Oberbegriff des Anspruchs 1 und ein Verfahren zur Beschickung einer Werkzeugmaschine nach dem Oberbegriff des Anspruchs 14.

Aus der EP 1 645 529 A1 ist eine Vorrichtung zum Transferieren von Gütern von einem ersten Förderer auf einen zweiten Förderer bekannt, mit einem vertikal verlaufenden Rahmen mit einer Längsachse, Transportmitteln, die am Rahmen angeordnet sind und von einem Motor angetrieben werden, und mindestens einem Träger, der mit den Transportmitteln verbunden ist, wobei der Träger mit den Transportmitteln zur Bewegung entlang des Rahmens verbunden ist, und wobei der Rahmen um seine Längsachse drehbar ist.

Aus der CN 2 319 384 Y ist eine Hubvorrichtung bekannt, die sich zum Transfer von Gütern zwischen zwei Ebenen in einer Fördervorrichtung eignet. Die Hubvorrichtung weist eine Hubsäule sowie an der Hubsäule eine erste Seite und eine zweite Seite mit jeweils einer Plattform auf, die über ein Kabel miteinander verbunden sind, wobei das Kabel durch einen Antrieb am oberen Ende der Hubsäule antreibbar ist.

Aus der WO 2005/026023 A1 ist eine Vorrichtung zur Handhabung von Kästen und dergleichen bekannt, die eine Plattform mit einer ersten seitlichen Stütze mit einer Führung zur Aufnahme eines ersten Trägers und einer zweiten seitlichen Stütze mit einer Führung zur Aufnahme eines zweiten Trägers aufweist, wobei die Vorrichtung dazu ausgebildet ist, die beiden Träger synchron zu verfahren, wobei ein Träger angehoben wird, wenn der andere Träger absinkt. Auf diese Weise können Kästen zwischen einem ersten Stapel auf einem ersten Wagen auf dem ersten Träger und einem zweiten Stapel auf dem einem Wagen auf dem zweiten Träger transferiert werden.

Aus der DE 34 24 988 A1 ist eine Stapelvorrichtung zur Bereitstellung von Gütern auf Ladehilfsmitteln bekannt, wobei die Vorrichtung einen Träger für einen ersten Stapel und einen Träger für einen zweiten Stapel umfasst, die unabhängig voneinander angehoben und abgesenkt werden können, und wobei Handhabungstechnik vorgesehen ist, um Ladehilfsmittel zwischen dem ersten Stapel und dem zweiten Stapel zu transferieren.

Aus der DE 10 2007 022 908 A1 ist ein Palettierer bekannt, der einen Rundtisch mit einer Drehsäule aufweist, wobei die Drehsäule zwei vertikal verfahrbare Ausleger aufweist, die um 180° versetzt an der Drehsäule gelagert sind. Die Ausleger weisen jeweils einen eigenen Hubantrieb auf.

Aus der EP 0 673 711 A1 ist ein Handhabungssystem zur Zuführung von Werkstücken an eine nachgeordnete Bearbeitungseinrichtung bekannt, wobei das Handhabungssystem einen Drehtisch zum Umsetzen von auf Rollwagen angeordneten Werkstückträgerstapeln mitsamt der Rollwagen aufweist, wobei sich an den Drehtisch eine Transfervorrichtung anschließt, die Werkstückträger zwischen dem Drehtisch und einer Warteposition oder einer Bereitstellungsposition transferiert, und wobei eine Ladevorrichtung mit Portallader vorgesehen ist, die Werkstückträger zwischen der Bereitstellungsposition und der Bearbeitungseinrichtung transferiert.

Aus der DE 298 12 106 U1 ist eine Vorrichtung zur maschinellen Handhabung von Paletten bekannt, die einen ersten Palettenlift und einen zweiten Palettenlift aufweist, die voneinander abgewandt sind, wobei oberhalb des ersten Palettenlifts und des zweiten Palettenlifts eine Transfereinheit zum Transferieren von Paletten zwischen dem ersten Palettenlift und dem zweiten Palettenlift angeordnet ist. Die Palettenlifte sind unabhängig voneinander vertikal verfahrbar.

Stapelvorrichtungen können mit weiteren Handhabungseinrichtungen gekoppelt werden, um einen zumindest teilautomatisierten Werkstückwechsel (auch als Laden bezeichnet) bei einer Werkzeugmaschine durchzuführen oder zu unterstützen.

Beispielhaft kann ein Fördermittel (zum Beispiel Flurfördermittel in Form eines Palettenwagens oder dergleichen) der ersten Seite zugeführt werden, wobei das Fördermittel einen Stapel aus zwei oder mehr übereinander angeordneten Ladehilfsmitteln trägt. Die Ladehilfsmittel sind beispielsweise Paletten, sogenannte Euro-Behälter, Trays, Kleinladungsträger (KLT) oder dergleichen. Die Ladehilfsmittel tragen oder beherbergen üblicherweise eine Mehrzahl oder Vielzahl von Werkstücken. In bestimmten Ausgestaltungen sind die Ladehilfsmittel dazu ausgebildet, sowohl Werkstücke vor der Bearbeitung in der Werkzeugmaschine als auch Werkstücke nach der Bearbeitung in der Werkzeugmaschine aufzunehmen.

Stapelvorrichtungen sind üblicherweise dazu ausgebildet, Stapel aus übereinander angeordneten Ladehilfsmitteln zu bilden (Stapeln) oder aufzulösen (Entstapeln). Im Bereich der Werkzeugmaschinen dient dies oft als vorbereitende Maßnahme zur eigentlichen Vereinzelung von Werkstücken, die von den Ladehilfsmitteln beherbergt werden. Die Vereinzelung umfasst die Entnahme oder Ablage einzelner Werkstücke, üblicherweise mit einer weiteren Handhabungseinrichtung, beispielsweise einem Handhabungsroboter. Demgemäß können Stapelvorrichtungen auch als Speicher oder Zwischenspeicher (Puffer) für Werkstücke dienen, wenn eine entsprechende Anzahl an Ladehilfsmitteln mit einer Mehrzahl von Werkstücken bereitgestellt wird.

Vor diesem Hintergrund liegt der Offenbarung die Aufgabe zugrunde, eine leistungsfähige Stapelvorrichtung anzugeben, die kompakt gestaltet und mit geringem Aufwand realisierbar ist. Vorzugsweise eignet sich die Stapelvorrichtung zur Kombination mit einer Handhabungseinheit, die einzelne Werkstücke vom Ladehilfsmittel der Palettiervorrichtung entnimmt oder an diese abgibt. Vorzugsweise kann die Stapelvorrichtung als Speicher oder Puffer genutzt werden, um eine teilautomatisierte oder hochautomatisierte Bearbeitung einer Mehrzahl oder Vielzahl von Werkstücken zu ermöglichen. Ferner sollen im Rahmen der Offenbarung ein mit einer solchen Stapelvorrichtung versehenes Automationsmodul, ein Fertigungssystem sowie ein Verfahren zur Beschickung einer Werkzeugmaschine angegeben werden.

Gemäß einem ersten Aspekt bezieht sich die vorliegende Offenbarung auf ein Automationsmodul nach Anspruch 1 mit einer Stapelvorrichtung zur Handhabung von Ladehilfsmit-
teln zur automatisierten Beschickung einer Werkzeugmaschine, insbesondere für einen automatisierten Werkstückwechsel, und mit einer Handhabungseinheit, die dazu ausgebildet ist, Werkstücke zwischen einem durch die Stapelvorrichtung bereitgestellten Ladehilfsmittel und der Werkzeugmaschine zu transferieren, wobei die Stapelvorrichtung Folgendes aufweist:
- eine Basis,
- ein Ständerwerk, das von der Basis gehalten ist und zumindest eine erste Vertikalführung und zumindest eine zweite Vertikalführung trägt,
- eine erste Seite mit einem vertikal verfahrbaren Tragsegment zur Aufnahme eines Fördermittels, das zwei oder mehr übereinander angeordnete Ladehilfsmittel trägt, die einen Stapel bilden, wobei die erste Vertikalführung der ersten Seite zugeordnet ist, und wobei das Tragsegment entlang der ersten Vertikalführung verfahrbar ist, und
- eine zweite Seite mit einer vertikal verfahrbaren Hubkonsole zur Aufnahme zumindest eines Ladehilfsmittels,
   wobei die Hubkonsole dazu ausgebildet ist, zwei oder mehr übereinander angeordnete Ladehilfsmittel zu tragen, die einen Stapel bilden, wobei die zweite Vertikalführung der zweiten Seite zugeordnet ist, und wobei die Hubkonsole entlang der zweiten Vertikalführung am Ständerwerk verfahrbar ist,
   wobei das Tragsegment und die Hubkonsole voneinander abgewandt am Ständerwerk angeordnet sind, und
   wobei das Tragsegment und die Hubkonsole über ein gemeinsames Koppelglied miteinander zwangsgekoppelt und über einen gemeinsamen Vertikalantrieb gegenläufig am Ständerwerk vertikal verfahrbar sind.

Die Aufgabe der Offenbarung wird auf diese Weise gelöst.

Das Tragsegment und die Hubkonsole sind beispielsweise mechanisch miteinander gekoppelt, insbesondere zwangsgekoppelt, vertikal verfahrbar. Dies ermöglicht die Verwendung eines gemeinsamen Vertikalantriebs, der beispielsweise einen (einzigen) Motor oder sonstigen Aktuator aufweist. Auf diese Weise kann der beanspruchte Bauraum reduziert werden. Der Vertikalantrieb kann derart angeordnet werden, dass sich eine gute Zugänglichkeit ergibt.

Die erste Seite kann auch als Ladeseite bezeichnet werden. Die erste Seite stellt beispielsweise eine Schnittstelle nach außen (zur Umgebung) bereit. Die erste Seite ist für Fördermittel zugänglich. An der ersten Seite können Fördermittel, insbesondere Flurfördermittel, abgefertigt werden, umfassend ein Ankoppeln oder Abkoppeln von Fördermitteln mit Ladehilfsmitteln und darin angeordneten Ladegütern (üblicherweise Werkstücke).

In funktionaler Hinsicht kann die erste Seite daher als Außenseite bezeichnet werden. Die zweite Seite kann in funktionaler Hinsicht als Innenseite bezeichnet werden. Die zweite Seite stellt ebenso eine Schnittstelle bereit, diese ist funktional hin zur Werkzeugmaschine orientiert. Die zweite Seite kann ebenso auch als Handhabungsseite bezeichnet werden, bei Verwendung eines Handhabungsroboters als Roboterseite. Bei der zweiten Seite erfolgt üblicherweise eine Vereinzelung bzw. ein Zusammenführen einzelner Werkstücke in Bezug auf Ladehilfsmittel.

Das Tragsegment ist in einer beispielhaften Ausgestaltung dazu ausgestaltet, das Fördermittel zu untergreifen, um dieses anheben zu können.

Bei dem Fördermittel handelt es sich beispielsweise um ein Flurfördermittel. Ein Flurfördermittel kann beispielhaft als Flurförderwagen gestaltet sein. Das Fördermittel kann ein angetriebenes Fördermittel oder antriebsloses Fördermittel sein. Das Fördermittel ist dazu ausgebildet, einen Stapel übereinander angeordneter Ladehilfsmittel zu tragen. Ladehilfsmittel sind beispielsweise Paletten, Trays, Euro-Behälter und dergleichen. Ladehilfsmittel beherbergen Werkstücke und vereinfachen die Handhabung und den Transfer der Werkstücke. Ladehilfsmittel können dazu ausgestaltet sein, eine Vielzahl von Werkstücken aufzunehmen. Die Werkstücke können lose oder geordnet im Ladehilfsmittel angeordnet sein. Beispielsweise weisen die Ladehilfsmittel spezifische Plätze und Aufnahmen für Werkstücke auf.

Sowohl das Tragsegment als auch die Hubkonsole sind dazu ausgestaltet, einen Stapel übereinander angeordneter Ladehilfsmittel zu tragen. Das Tragsegment ist in einer Ausgestaltung dazu ausgebildet, diesen Stapel mittelbar zu tragen. Dies ist der Fall, wenn das Tragsegment ein Fördermittel trägt und dieses wiederum den Stapel trägt. Die Hubkonsole ist in einer Ausgestaltung dazu ausgestaltet, den Stapel direkt und unmittelbar zu tragen. Zu diesem Zweck umfasst die Hubkonsole beispielsweise eine Auflage für übereinander angeordnete Ladehilfsmittel.

Die Stapelvorrichtung weist in einer beispielhaften Ausgestaltung eine bewegliche/verfahrbare Basis auf. Auf diese Weise kann die Stapelvorrichtung bedarfsweise mit einer Werkzeugmaschine und/oder weiteren Handhabungseinheiten gekoppelt werden. Auf diese Weise bleiben die Werkzeugmaschine bzw. ein damit versehenes Fertigungssystem flexibel nutzbar.

Eine automatisierte Beschickung umfasst zumindest teilautomatisierte Werkstückwechselprozesse. In einer beispielhaften Ausgestaltung umfasst dies einen vollautomatisierten Transfer von zu bearbeitenden Werkstücken zwischen der ersten Seite der Stapelvorrichtung, an der das Fördermittel ankoppeln kann, und der Werkzeugmaschine zur eigentlichen Bearbeitung, sowie einen vollautomatisierten Transfer von bearbeiteten Werkstücken zwischen der Werkzeugmaschine und der ersten Seite der Stapelvorrichtung. Es versteht sich, dass die Bewegung der Werkstücke teilweise vereinzelt, teilweise aber auch in Gruppen (beispielsweise chargenweise im Ladehilfsmittel) erfolgen kann. Die Stapelvorrichtung ist dazu ausgebildet, Ladehilfsmittel zu transferieren. Vom jeweiligen Ladehilfsmittel getragene Werkstücke werden auf diese Weise zwischen der ersten Seite und der zweiten Seite hin und her bewegt. Die weitere Vereinzelung kann dann über eine Handhabungseinheit erfolgen, die zwischen der Stapelvorrichtung und der Werkzeugmaschine angeordnet ist.

In einer Ausgestaltung umfasst das Ständerwerk zumindest zwei Vertikalführungen. Eine erste Vertikalführung ist der ersten Seite zugeordnet, wobei das Tragsegment an der ersten Vertikalführung gelagert und vertikalbeweglich geführt ist. Eine zweite Vertikalführung ist der zweiten Seite zugeordnet, wobei die Hubkonsole an der zweiten Vertikalführung gelagert und vertikalbeweglich geführt ist. Die zumindest eine Vertikalführung kann jeweils zwei oder mehr parallel angeordnete Führungsschienen umfassen.

In einer beispielhaften Ausgestaltung sind das Tragsegment und die Hubkonsole bei der Überführung eines Stapels von Ladehilfsmitteln zwischen der ersten Seite und der zweiten Seite mit Pilgerschritt-Charakteristik vertikal verfahrbar, wobei die Übergabe eines Ladehilfsmittel zwischen der ersten Seite und der zweiten Seite durch eine Horizontalbewegung erfolgt. Die Pilgerschritt-Charakteristik erlaubt auch bei einer Übergabe mittels Horizontalbewegung (ohne zusätzliche Vertikalkomponente bei der Bewegung des Ladehilfsmittels während der Übergabe) einen Transfer zwischen der ersten und der zweiten Seite, und zwar auch dann, wenn übereinander angeordnete Ladehilfsmittel ineinander eingreifen. Die Vertikalkomponente wird also nicht auf Seiten des zu transferierenden Ladehilfsmittels erzeugt, sondern durch Anheben oder Absenken des Stapels, von dem das Ladehilfsmittel entnommen und/oder auf dem das Ladehilfsmittel abgesetzt wird.

In einer beispielhaften Ausgestaltung sind die Hubkonsole und das Tragsegment voneinander abgewandt an der zumindest einen Vertikalführung, insbesondere jeweils an einer eigenen Vertikalführung angeordnet. In einer Ausgestaltung sind die Hubkonsole und das Tragsegment vertikal verfahrbar am Ständerwerk gelagert, wobei sich das Tragsegment in Richtung auf die erste Seite und die Hubkonsole in Richtung auf die zweite Seite erstreckt.

Gemäß einer beispielhaften Ausgestaltung sind das Tragsegment und die Hubkonsole über ein gemeinsames Zugmittel miteinander gekoppelt, insbesondere zwangsgekoppelt, und entlang der zumindest einen Vertikalführung am Ständerwerk gegenläufig verfahrbar. Das Zugmittel ist beispielsweise im Betrieb jeweils fest mit der Hubkonsole und fest mit dem Tragsegment verbunden. Auf diese Weise ergibt sich eine Bewegungskopplung. Wenn das Tragsegment vom Vertikalantrieb bewegt wird, bewegt sich automatisch auch die Hubkonsole, zumindest in einer entsprechenden Ausgestaltung. Dies gilt bei einer alternativen Ausgestaltung auch umgekehrt. Wenn das Tragsegment nach oben fährt, fährt die Hubkonsole nach unten, und umgekehrt.

Gemäß einer weiteren beispielhaften Ausgestaltung umfassen die gemeinsamen Vertikalbewegungen des Tragsegments und der Hubkonsole jeweils einen betragsmäßig gleichen Hub. Es ergibt sich eine entgegengerichtete Vertikalbewegung mit jeweils gleichem Hub, zumindest gemäß einer beispielhaften Ausgestaltung. Die Kopplung des Tragsegments und der Hubkonsole führt hier zu betragsgleichen, aber entgegengerichteten Bewegungen.

Dies kann beispielhaften über ein gemeinsames Zugmittel erfolgen, das das Tragsegmentsegment und die Hubkonsole miteinander koppelt. Bei dem Zugmittel handelt es sich beispielhaft um einen Zahnriemen, eine Kette, ein Zugseil, eine umlenkbare Zugstange oder dergleichen. Das Zugmittel wird in einer beispielhaften Ausgestaltung ähnlich einem auf dem Kopf stehenden U in einem oberen Bereich des Ständerwerks umgelenkt. Die Umlenkung kann durch eine Rolle, ein Rad oder dergleichen erfolgen.

Es ist vorstellbar, das Zugmittel als offenes Zugmittel gestalten, ähnlich einem auf dem Kopf stehenden U oder einem aufrecht stehenden U. Es ist jedoch auch vorstellbar, das Zugmittel als geschlossenes Zugmittel zu gestalten. Es ist vorstellbar, in einem solchen Fall im oberen Bereich des Ständerwerks sowie im unteren Bereich des Ständerwerks jeweils eine Umlenkung für das Zugmittel vorzusehen.

Das Zugmittel kann auch ein kombiniertes Zug-/Schubmittel sein, so dass nicht nur Zugkräfte übertragen werden können. Die Antriebskraft kann direkt in das Zugmittel eingeleitet werden. Es ist jedoch auch vorstellbar, die Antriebskraft anderweitig einzuleiten und das Zugmittel primär zur Bewegungskopplung zwischen dem Tragsegment und der Hubkonsole vorzusehen.

Das Tragsegment und die Hubkonsole sind in einer beispielhaften Ausgestaltung jeweils über ein Haltestück mit dem Koppelglied zur vertikalen Bewegungsmitnahme verbunden. Mit anderen Worten können das Tragsegment und die Hubkonsole am Koppelglied befestigt werden, so dass bei einer Bewegung des Koppelgliedes entsprechende Bewegungen des Tragsegments und der Hubkonsole folgen.

Gemäß einer weiteren beispielhaften Ausgestaltung ist das Tragsegment zum Untergreifen und Anheben eines rollbaren Fördermittels ausgestaltet, das zur Aufnahme eines Stapels übereinander angeordneter Ladehilfsmittel ausgebildet ist, wobei die Hubkonsole eine Auflage zur direkten Aufnahme eines Stapels von Ladehilfsmitteln aufweist. Die Hubkonsole ist also nicht dazu ausgebildet, das Fördermittel zu untergreifen und anzuheben. Die Hubkonsole ist dazu ausgebildet, Ladehilfsmittel direkt aufzunehmen. Das Tragsegment ist dazu ausgebildet, Ladehilfsmittel indirekt über das zwischengeschaltete Fördermittel anzuheben.

Gemäß einer weiteren beispielhaften Ausgestaltung wirkt der Vertikalantrieb auf das Tragsegment ein, um das Tragsegment und mittelbar die Hubkonsole einander entgegengerichtet vertikal zu verfahren. Es ist vorstellbar, den Vertikalantrieb unabhängig vom Koppelglied mit dem Tragsegment zu koppeln. Zu diesem Zweck kann der Vertikalantrieb direkt auf das Tragsegment einwirken. Das Tragsegment ist über das Koppelglied (beispielsweise Riemen o. ä. Zugmittel) mit der Hubkonsole zur Bewegungsmitnahme verbunden.

Das vertikale Verfahren kann eine Schrittcharakteristik oder Pilgerschritt-Charakteristik umfassen, bezogen auf die jeweilige Vertikalposition. Auf diese Weise kann auf der ersten Seite ein Stapel von Ladehilfsmitteln, die am Tragsegment aufgenommen sind, allmählich Abgetragen werden, damit einhergehend kann auf der Hubkonsole auf der zweiten Seite ein Stapel von Ladehilfsmitteln aufgebaut werden.

In einer beispielhaften Ausgestaltung umfasst der Vertikalantrieb einen Motor, der auf einen Gewindetrieb oder Kugelgewindetrieb mit vertikaler Haupterstreckungsrichtung einwirkt. Auf diese Weise kann ein stationär angeordneter Motor vorgesehen sein, dessen Abtrieb (beispielsweise Gewindespindel) direkt oder indirekt mit dem Tragsegment gekoppelt ist. Auf diese Weise kann das Tragsegment mit hinreichender Genauigkeit angesteuert werden, um die gewünschte Bewegungscharakteristik (Schrittcharakteristik oder Pilgerschritt-Charakteristik) herbeizuführen.

In einer beispielhaften Ausgestaltung ist also der Motor des Vertikalantriebs nicht direkt mit dem beispielsweise als Zugmittel gestalteten Koppelglied zu dessen Antrieb verbunden. Stattdessen erfolgt bei dieser Ausführungsform der Antrieb des Zugmittels mittelbar über ein Abtriebselement (beispielsweise Gewindespindel) des Motors und über das Tragsegment, das sowohl mit dem Zugmittel als auch mit dem Abtriebselement gekoppelt ist. Ferner kann sich auf diese Weise die Sicherheit im Falle des Versagens des Koppelgliedes erhöhen, da hiervon das Abtriebselement nicht unmittelbar betroffen ist.

Es ist gleichwohl auch vorstellbar, den Motor des Vertikalantriebs direkt mit dem Zugmittel zu koppeln. Dies bietet sich für Ausführungsformen an, bei denen das Zugmittel zur formschlüssigen Mitnahme ausgebildet ist, beispielsweise als Kette oder Zahnriemen.

In einer beispielhaften Ausgestaltung ist der Vertikalantrieb auf der ersten Seite angeordnet, um dort auf das Tragsegment einzuwirken. Wesentliche Komponenten des Antriebs, beispielsweise Motor, primäre Kraftübertragung und Ähnliches, sind auf der ersten Seite angeordnet. Auch dies trägt dazu bei, die zweite Seite für Handhabungseinheiten zugänglich zu halten, um dort Werkstücke zu vereinzeln oder in einem Ladehilfsmittel zu sammeln.

Mit anderen Worten ist also beispielhaft eine Steuereinrichtung vorgesehen, die den Vertikalantrieb derart ansteuert, dass das Tragsegment und die Hubkonsole aufgrund der dazwischen ausgebildeten Kopplung bei der Überführung eines Stapels von Ladehilfsmitteln zwischen der ersten Seite und der zweiten Seite schrittweise, gegebenenfalls mit Pilgerschritt-Charakteristik, vertikal verfahrbar sind.

Die Pilgerschritt-Charakteristik kann etwa dann hilfreich sein, wenn ein hinreichender vertikaler Abstand zwischen einer Unterseite eines Ladehilfsmittels und einem darunter angeordneten Ladehilfsmittel eines Stapels gewährleistet sein muss, damit eine Übergabe zwischen der ersten und zweiten Seite ausschließlich oder nahezu ausschließlich über eine Horizontalbewegung erfolgen kann. Dies gilt gleichermaßen für das letzte (untere) Ladehilfsmittel eines Stapels, das direkt auf der Hubkonsole und/oder direkt auf dem Fördermittel auf dem Tragsegment aufliegt. Auf diese Weise können etwa ineinander eingreifende Ladehilfsmittel voneinander gelöst werden.

Gemäß einer weiteren beispielhaften Ausgestaltung weist die Stapelvorrichtung ferner eine Übergabeeinheit auf, die dazu ausgebildet ist, ein Ladehilfsmittel zwischen der ersten Seite und der zweiten Seite zu transferieren, wobei insbesondere am Ständerwerk eine für die Übergabeeinheit passierbare Übergabeöffnung ausgebildet ist, die für ein Ladehilfsmittel passierbar ist. Die Übergabeeinheit kann auch als Umsetzer bezeichnet werden. Gemäß einer beispielhaften Ausgestaltung trägt das Ständerwerk die Übergabeeinheit. Gemäß einer beispielhaften Ausstellung ist die Übergabeöffnung für genau ein Ladehilfsmittel passierbar, wobei mehrere Ladehilfsmittel die Übergabeöffnung nacheinander passieren können.

Die Übergabeeinheit ist in einer beispielhaften Ausgestaltung oberhalb des Tragsegments und der Hubkonsole angeordnet. Die Übergabeeinheit sorgt für eine Übergabe von Ladehilfsmitteln zwischen der ersten Seite und der zweiten Seite. In einer beispielhaften Ausgestaltung sind die erste Seite und die zweite Seite zumindest abschnittsweise voneinander getrennt, insbesondere durch eine Trennwand, wobei die Trennwand durch die Übergabeöffnung unterbrochen ist.

Gemäß einer beispielhaften Ausgestaltung ist die Übergabeöffnung im oberen Bereich des Ständerwerks ausgebildet. Die Übergabeöffnung weist beispielhaft eine Höhe und eine Breite auf, die an die Höhe und die Breite der Ladehilfsmittel angepasst sind, so dass ein Ladehilfsmittel die Übergabeöffnung passieren kann, aber keine zu große Öffnung zwischen der ersten und der zweiten Seite gegeben ist. Ein einzelnes Ladehilfsmittel kann die Übergabeöffnung passieren. Dies führt zu einer bestimmten Handhabung der einzelnen Ladehilfsmittel, wenn ein Stapel aus mehreren Ladehilfsmitteln zwischen der ersten und der zweiten Seite umgesetzt werden soll.

In einer beispielhaften Ausgestaltung ist demgemäß das Ständerwerk abgesehen von der Übergabeöffnung zwischen der ersten und der zweiten Seite durch eine Trennwand geschlossen. Die Übergabeöffnung ist in einer Ausgestaltung beim oberen Bereich des Ständerwerks angeordnet und derart ausgebildet, dass zwei übereinander angeordnete Ladehilfsmittel nicht hindurchgeführt werden können.

Gemäß einer weiteren beispielhaften Ausgestaltung umfasst die Übergabeeinheit einen Hängeträger mit einem Verriegelungsmechanismus zum Greifen und Halten eines Ladehilfsmittels. In einer beispielhaften Ausgestaltung greift der Hängeträger von oben an das Ladehilfsmittel an, um dieses zu greifen und zu halten. Dies kann formschlüssig und/oder kraftschlüssig erfolgen. Der Verriegelungsmechanismus kann als aktiver oder passiver Verriegelungsmechanismus ausgestaltet sein, also mit eigenem Antrieb oder ohne eigenen Antrieb ausgestaltet sein. Der Hängeträger ist beispielsweise als Shuttle gestaltet, das zwischen der ersten Seite und der zweiten Seite horizontal hin und her verfahren wird.

Gemäß einer weiteren beispielhaften Ausgestaltung wird der gemeinsame Vertikalantrieb des Tragsegments und der Hubkonsole gezielt angesteuert, um eine gewünschte Vertikalposition in Bezug auf die Übergabeeinheit für die Aufnahme oder Abgabe eines Ladehilfsmittels anzufahren. Dies umfasst jeweils eine korrespondierende Gegenbewegung des anderen Teils. Das Greifen des Ladehilfsmittels durch den Hängeträger kann einen gezielten Übergabehub durch das Tragsegment bzw. die Hubkonsole umfassen. Die Abgabe des Ladehilfsmittels durch den Hängeträger kann einen gezielten Übernahmehub durch das Tragsegment bzw. die Hubkonsole umfassen. Damit wird berücksichtigt, dass gemäß bestimmten Ausgestaltungen der Hängeträger selbst nicht vertikal verfahrbar ist.

Gemäß einer weiteren beispielhaften Ausgestaltung weist die Übergabeeinheit einen Horizontalantrieb auf, der zumindest dann im Wesentlichen auf der ersten Seite angeordnet ist, wenn der Horizontalantrieb die erste Seite angefahren hat. Insbesondere ist der Horizontalantrieb oberhalb des Tragsegments auf der ersten Seite angeordnet. Beispielhaft befindet sich der Horizontalantrieb vollständig oder nahezu vollständig auf der ersten Seite, wenn der Hängeträger auf die erste Seite gefahren ist. Auf diese Weise ergibt sich auf der zweiten Seite eine gute Zugänglichkeit von oben. Dies kann beispielsweise durch eine Handhabungseinheit genutzt werden, die Werkstücke aus einem oberen Ladehilfsmittel entnimmt oder in diesem ablegt.

In einer beispielhaften Ausgestaltung umfasst der Horizontalantrieb einen Aktuator in Form eines Zylinders. Beispielhaft umfasst der Horizontalantrieb einen fluidischen Zylinder, der zwischen zwei Endlagen verfahren werden kann. Beispielsweise umfasst ein solcher Zylinder ein Zylindergehäuse mit einer ausfahrbaren Kolbenstange. Es sind jedoch auch andere als fluidische Aktuatoren vorstellbar, beispielsweise Elektromotoren mit Gewindespindeln oder Kugelgewindespindeln, die mit mutterartig gestalteten Gegenstücken zusammenwirken, um eine Linearbewegung zu erzeugen. In einer beispielhaften Ausgestaltung weist die Übergabeeinheit keinen Vertikalantrieb auf. Die Bereitstellung der Ladehilfsmittel erfolgt hingegen durch den Vertikalantrieb, der das Tragsegment und die Hubkonsole bewegt.

Gemäß einer weiteren beispielhaften Ausgestaltung ist die Übergabeeinheit in einer ersten Position auf der ersten Seite derart positioniert, dass ein auf der zweiten Seite von der Hubkonsole getragenes Ladehilfsmittel von oben für eine Handhabungseinheit frei zugänglich ist. Dies gilt jeweils für das obere Ladehilfsmittel eines Stapels. Die Übergabeeinheit stört also nicht bei weiteren Transferschritten und Vereinzelungsschritten. Frei zugänglich ist im Rahmen der vorliegenden Offenbarung derart zu verstehen, dass eine Handhabungseinheit etwaige Plätze für Werkstücke im Ladehilfsmittel erreichen kann.

Gemäß einer weiteren beispielhaften Ausgestaltung weist die Übergabeeinheit einen horizontal verfahrbaren Horizontalschlitten auf, der insbesondere in einer konstanten Vertikalpositionen horizontal verfahrbar ist. Der Hängeträger ist am Horizontalschlitten aufgenommen oder integral mit diesem gestaltet.

Gemäß einer weiteren beispielhaften Ausgestaltung ist die Übergabeeinheit horizontal teleskopierbar, wobei die Übergabeeinheit insbesondere eine relativ zu einer Führungsbasis verfahrbare Doppelführung mit zwei parallelen Führungsabschnitten aufweist, von denen einer der Führungsbasis und ein anderer dem Horizontalschlitten zugeordnet ist. Auf diese Weise kann der horizontale Bauraum der Übergabeeinheit begrenzt werden, es lassen sich gleichwohl hinreichend große horizontale Verfahrwege bewerkstelligen.

Gemäß einer weiteren beispielhaften Ausgestaltung sind der Horizontalschlitten, die Führungsbasis und die Doppelführung über ein Zugmittel derart miteinander gekoppelt, dass bei einer Bewegung der Doppelführung relativ zur Führungsbasis der Horizontalschlitten relativ zur Doppelführung bewegt wird, insbesondere richtungsgleich. Auf diese Weise gibt sich eine gekoppelte Bewegung, so dass bei einem gegebenen Verfahrweg des Horizontalantriebs ein größerer Verfahrweg des am Horizontalschlitten angeordneten Hängeträgers ermöglicht ist. Durch die gekoppelte Bewegung lässt sich der Verfahrweg des Horizontalantriebs in einen doppelt so großen Verfahrweg des Horizontalschlittens überführen, zumindest in einer beispielhaften Ausgestaltung.

In einer beispielhaften Ausgestaltung ist die Führungsbasis gestellfest am Ständerwerk angeordnet. Die Doppelführung kann durch den Horizontalantrieb entlang der Führungsbasis relativ zum Ständerwerk bewegt werden. Die Doppelführung trägt ein beispielsweise als Zugmittel gestaltetes Koppelglied, das einerseits mit der Basisführung und andererseits mit der Horizontalführung zur Bewegungsmitnahme gekoppelt ist. Das Zugmittel ist beispielsweise ein Zahnriemen, eine Kette, ein Zugseil, eine umlenkbare Zugstange oder dergleichen. In einer beispielhaften Ausgestaltung weist die Doppelführung an ihren beiden Enden jeweils eine Umlenkung für das Zugmittel auf. Auf diese Weise ergibt sich die Teleskopierbarkeit der Übergabeeinheit, wobei kein zusätzlicher Aktuator erforderlich ist.

Gemäß einer weiteren beispielhaften Ausgestaltung ist der Horizontalantrieb der Übergabeeinheit direkt mit einem als Zugmittel gestalteten Koppelglied der Übergabeeinheit gekoppelt. Auf diese Weise kann der Horizontalantrieb etwa als Rotationsantrieb gestaltet sein und das Koppelglied zum Verfahren des Hängeträgers ansteuern. Dies eignet sich beispielsweise für Koppelglieder, die zur formschlüssigen Bewegungsmitnahme ausgestaltet sind, etwa als Zahnriemen oder Kette.

Gemäß einer weiteren beispielhaften Ausgestaltung sind auf der ersten Seite und auf der zweiten Seite jeweils zwei Plätze zur Aufnahme eines Stapels von Ladehilfsmitteln ausgebildet, wobei die beiden Stapel unabhängig voneinander ansteuerbar und verfahrbar sind. Auf diese Weise erhöht sich die Kapazität der Stapelvorrichtung. In einer beispielhaften Ausgestaltung können beide Stapel auf der zweiten Seite von ein und derselben Handhabungseinheit erreicht werden. Durch die Bereitstellung zweier Plätze auf der ersten Seite und der zweiten Seite lassen sich zwei funktional parallele Förderpfade realisieren, über die Ladehilfsmittel mit Werkstücken zugeführt oder abgeführt werden können. Es versteht sich, dass auch Ausgestaltungen mit mehr als zwei Plätzen auf jeder der ersten und der zweiten Seite und entsprechend mehr als zwei Förderpfaden vorstellbar sind. Auf diese Weise kann die Werkstückkapazität erhöht werden.

Gemäß einer Ausführungsform umfasst jeder der beiden Pfade ein Tragsegment und eine Hubkonsole, für die je Pfad ein gemeinsamer Vertikalantrieb zur Verfügung steht, wobei ferner jedem Pfad eine Übergabeeinheit mit Horizontalantrieb zugeordnet ist. In einem Ausführungsbeispiel sind die beiden Pfade für einen parallelen Betrieb vorgesehen. Dies schließt in einer beispielhaften Ausgestaltung einen Transfer von einzelnen Ladehilfsmitteln innerhalb der Stapelvorrichtung zwischen den beiden Pfaden aus.

Wenn zwei solche Pfade vorgesehen sind, ist eine hauptzeitparallele Bereitstellung von Werkstücken auf der zweiten Seite und gegebenenfalls ein hauptzeitparalleler Wechsel zwischen verschiedenen Ladehilfsmitteln ermöglicht. Auf diese Weise werden unproduktive Nebenzeiten weiter reduziert. Unter Nutzung der beiden Pfade kann auch ein Wechsel zwischen verschiedenen Werkstücken oder verschiedenen Bearbeitungsaufgaben erfolgen, wobei an der zweiten Seite neben dem aktuell aktiven Stapel ein weiterer Stapel mit Ladehilfsmitteln bereitgestellt werden kann, der nahtlos für Handhabungsaufgaben zur Verfügung steht.

Die beiden Plätze sind in einer Ausgestaltung nebeneinander angeordnet, so dass zwei Stapel nebeneinander handhabbar sind. Die einzelnen Stapel können hauptzeitparallel bearbeitet werden. Dies bietet sich auch für zwei Stapel mit Werkstücken desselben Typs an. Im Falle eines Transfers eines Ladehilfsmittels eines der beiden Stapel kann die Handhabungseinheit den anderen Stapel anfahren.

Wenn zwei Pfade mit jeweils zwei Plätzen auf der ersten Seite und der zweiten Seite vorgesehen sind, erhöht sich auch die Speicherkapazität der Stapelvorrichtung. Die Doppelstruktur sorgt für eine erhöhte Redundanz bei der Bearbeitung. Es ist auch vorstellbar, einen Pfad für die Bereitstellung von zu bearbeitenden Werkstücken (Rohteile oder Halbzeuge) zu verwenden und den anderen Pfad für die Übernahme und Abgabe bearbeiteter Werkstücke (Fertigteile) zu nutzen. Dies ist etwa dann vorstellbar, wenn ein und dasselbe Ladehilfsmittel nicht sowohl Werkstücke vor der Bearbeitung als auch Werkstücke nach der Bearbeitung aufnehmen kann oder soll.

Die vorliegende Offenbarung bezieht sich auf ein Automationsmodul mit einer Stapelvorrichtung gemäß zumindest einer der hierin beschriebenen Ausgestaltungen, und mit einer Handhabungseinheit, die dazu ausgebildet ist, Werkstücke zwischen einem durch die Stapelvorrichtung bereitgestellten Ladehilfsmittel und einer Werkzeugmaschine zu transferieren.

Ein solches Automationsmodul kann fahrbar gestaltet sein. Das Automationsmodul kann bedarfsweise mit einer Werkzeugmaschine gekoppelt werden. Demgemäß können die Stapelvorrichtung und die Handhabungseinheit baulich zusammengefasst sein. Andere Gestaltungen sind denkbar. Das Automationsmodul mit der Handhabungseinheit bewerkstelligt einen Werkstückwechsel, also ein Beladen und Entladen der Werkzeugmaschine. Die Handhabungseinheit kann Werkstücke von den auf der zweiten Seite der Stapelvorrichtung bereitgestellten Ladehilfsmitteln entnehmen und an diese abgeben. Da die Stapelvorrichtung eine beträchtliche Pufferkapazität haben kann, kann eine Charge von Werkstücken teilautomatisiert oder vollautomatisiert bearbeitet werden. Dies umfasst beispielhaft das Beladen und das Entladen, also Werkstücke vor der Bearbeitung und nach der Bearbeitung in der Werkzeugmaschine.

Der Transfer zwischen der Stapelvorrichtung und der Werkzeugmaschine kann direkt oder indirekt erfolgen. Es ist vorstellbar, weitere Pufferspeicher zu berücksichtigen. Die Handhabungseinheit ist beispielhaft als Roboter oder Handhabungsroboter gestaltet. Es handelt sich in einer beispielhaften Ausgestaltung um einen KnickarmRoboter. Dies ist nicht einschränkend zu verstehen. In einer beispielhaften Ausgestaltung ist die Handhabungseinheit bodenseitig gelagert (stehend gelagert). In einer beispielhaften Ausgestaltung ist die Handhabungseinheit deckenseitig gelagert (hängend gelagert).

Gemäß einem weiteren Aspekt bezieht sich die vorliegende Offenbarung auf ein Fertigungssystem nach Anspruch 13 mit einer Werkzeugmaschine und einem Automationsmodul gemäß zumindest einer der hierin beschriebenen Ausführungsformen.

Bei der Werkzeugmaschine handelt es sich insbesondere um eine Bearbeitungsmaschine. Allgemein handelt es sich bei der Werkzeugmaschine um eine Maschine zur subtraktiven und/oder additiven Bearbeitung.

Gemäß einem weiteren Aspekt bezieht sich die vorliegende Offenbarung auf ein Verfahren nach Anspruch 14
zur Beschickung einer Werkzeugmaschine, insbesondere für einen automatisierten Werkstückwechsel, mit den folgenden Schritten:
- Bereitstellung einer Stapelvorrichtung, die eine Basis, ein Ständerwerk, das von der Basis gehalten ist und zumindest eine erste Vertikalführung und zumindest eine zweite Vertikalführung trägt, eine erste Seite mit einem vertikal verfahrbaren Tragsegment zur Aufnahme eines Fördermittels, das zwei oder mehr übereinander angeordnete Ladehilfsmittel trägt, wobei die erste Vertikalführung der ersten Seite zugeordnet ist, und wobei das Tragsegment entlang der ersten Vertikalführung verfahrbar ist, eine zweite Seite mit einer vertikal verfahrbaren Hubkonsole zur Aufnahme zumindest eines Ladehilfsmittels, die dazu ausgebildet ist, zwei oder mehr übereinander angeordnete Ladehilfsmittel zu tragen, wobei die zweite Vertikalführung der zweiten Seite zugeordnet ist, und wobei die Hubkonsole entlang der zweiten Vertikalführung am Ständerwerk verfahrbar sind, wobei das Tragsegment und die Hubkonsole voneinander abgewandt am Ständerwerk angeordnet sind, und eine Übergabeeinheit aufweist, die dazu ausgebildet ist, ein Ladehilfsmittel zwischen der ersten Seite und der zweiten Seite horizontal zu transferieren,
   wobei das Tragsegment und die Hubkonsole über ein gemeinsames Koppelglied miteinander zwangsgekoppelt und über einen gemeinsamen Vertikalantrieb gegenläufig am Ständerwerk vertikal verfahrbar sind,
- Zuführen eines Fördermittels, das einen Stapel aus zumindest zwei übereinander angeordneten Ladehilfsmitteln trägt, zur ersten Seite,
- Aufnahme des Fördermittels mit den Ladehilfsmitteln durch das Tragsegment,
- vertikales Verfahren des Tragsegments, so dass ein oberes Ladehilfsmittel durch die Übergabeeinheit greifbar ist,
- Greifen des oberen Ladehilfsmittels durch die Übergabeeinheit,
- horizontales Verfahren des Ladehilfsmittels mit der Übergabeeinheit von der ersten Seite auf die zweite Seite, und
- vertikales Verfahren der Hubkonsole derart, dass das Ladehilfsmittel als oberes Ladehilfsmittel von der Übergabeeinheit auf der Hubkonsole oder auf einem dort bereits bereitstehenden Ladehilfsmittel absetzbar ist,
   wobei das vertikale Verfahren des Tragsegments und das vertikale Verfahren der Hubkonsole zwangsgekoppelt und insbesondere mittels Pilgerschritt-Charakteristik erfolgt.

Es versteht sich, dass das offenbarungsgemäße Verfahren analog zu den offenbarungsgemäßen Ausführungsformen des Automationsmodul sowie des Fertigungssystems ausgestaltet sein kann, und umgekehrt.

Das offenbarungsgemäße Verfahren erlaubt eine teilautomatisierte oder vollautomatisierte Bereitstellung von Ladehilfsmitteln mit einer Mehrzahl von Werkstücken, wobei eine gute Zugänglichkeit für die Vereinzelung gegeben ist. Ferner ermöglicht die gekoppelte oder zwangsgekoppelte Vertikalbewegung des Tragsegments und der Hubkonsole in einfacher Weise eine aufeinander abgestimmte Bewegung, ohne dass es separater Antriebseinheiten bedarf.

Ein Stapel umfasst üblicherweise zwei oder mehr Ladehilfsmittel. Das obere Ladehilfsmittel eines Stapels ist jeweils das von oben zugängliche Ladehilfsmittel, das oberhalb zumindest eines weiteren Ladehilfsmittels angeordnet ist. Sollte in einer Ausgestaltung lediglich ein Ladehilfsmittel auf der Hubkonsole oder dem Tragsegment angeordnet sein, so kann auch dieses als oberes Ladehilfsmittel verstanden werden.

Die gekoppelte Bewegung des Tragsegments und der Hubkonsole vereinfacht den Transfer einer Mehrzahl von Ladehilfsmitteln zwischen der ersten Seite und der zweiten Seite. Mit anderen Worten wird das Tragsegment mit dem Fördermittel schrittweise angehoben, wenn ein dortiger Stapel von Ladehilfsmitteln Stück für Stück durch die Übergabeeinheit zu einem sich auf der Hubkonsole auf der zweiten Seite bildenden Stapel umgesetzt wird. Dies umfasst eine gleichermaßen schrittweise Absenkbewegung der Hubkonsole.

Die vertikalen Bewegungen des Tragsegments und der Hubkonsole sind aneinander angepasst. Die Ausgangshöhe (bzw. der Ausgangshöhenversatz zwischen Tragsegment und Hubkonsole) kann durch Anpassung der Länge des Koppelglieds zwischen dem Tragsegment und der Hubkonsole beeinflusst werden. Die vertikalen Bewegungen des Tragsegments und der Hubkonsole können eine Pilgerschritt-Charakteristik aufweisen, wenn jeweils ein oberes Ladehilfsmittel von einem darunter angeordneten Ladehilfsmittel abgehoben und/oder auf ein solches abgesetzt werden soll.

Gemäß einer beispielhaften Ausgestaltung des Verfahrens wird die Übergabeeinheit nach dem Absetzen des Ladehilfsmittels von der zweiten Seite zurück zur ersten Seite horizontal verfahren, so dass ein weiteres Ladehilfsmittel vom Fördermittel entnommen und auf dem bereits auf der Hubkonsole bereitstehenden Ladehilfsmittel abgesetzt wird, wobei die Entnahme einzelner Werkstücke für Bearbeitungszwecke beginnend mit dem oberen Ladehilfsmittel eines von der Hubkonsole gehaltenen Stapels erfolgt.

Gemäß dieser Ausgestaltung wird also der gesamte Stapel (mehrere Ladehilfsmittel) zwischen der ersten Seite und der zweiten Seite transferiert. Beginnend mit dem oberen Ladehilfsmittel des Stapels auf der zweiten Seite (dieses Ladehilfsmittel war gegebenenfalls auf der ersten Seite das untere Ladehilfsmittel des Stapels) kann die Handhabungseinheit mit der Vereinzelung und dem Transfer der Werkstücke beginnen.

Gemäß einer weiteren beispielhaften Ausgestaltung werden Werkstücke nach einer Bearbeitung im oberen Ladehilfsmittel des von der Hubkonsole gehaltenen Stapels abgelegt, so dass bei vollständiger Befüllung das obere Ladehilfsmittel durch die Übergabeeinheit von der zweiten Seite zurück zur ersten Seite verfahrbar ist. Dies umfasst beispielsweise gekoppelte und einander entgegengerichtete vertikale Verfahrbewegungen des Tragsegments und der Hubkonsole.

Es wird also beginnend mit dem oberen Ladehilfsmittel der Stapel zurück zur ersten Seite transferiert. Dies ist auch mit einem leeren Ladehilfsmittel möglich, wenn bearbeitete Werkstücke anderweitig abgeführt werden. Mit anderen Worten werden die zu bearbeitende Teile eines Stapels zunächst vollständig von der ersten Seite auf die zweite Seite transferiert. Dort wird beginnend mit dem oberen Ladehilfsmittel mit dem Transfer hin zur Werkzeugmaschine begonnen.

Bearbeitete Werkstücke können im gleichen Ladehilfsmittel abgelegt werden. Es ist auch vorstellbar, bearbeitete Werkstücke in einem anderen Ladehilfsmittel abzulegen, etwa in einem weiteren Platz, der einem zweiten Förderpfad zugehörig ist. Wenn ein oberes Ladehilfsmittel vollständig geleert ist oder ein vollständiger Austausch unbearbeiteter Werkstücke durch bearbeitete Werkstücke vollzogen wurde, kann dieses Ladehilfsmittel unter Nutzung der Übergabeeinheit zurück zur ersten Seite überführt werden. Dies lässt sich mit den weiteren, darunter angeordneten Ladehilfsmitteln fortsetzen.

Weitere Merkmale und Vorteile der Offenbarung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Ausführungsform einer Stapelvorrichtung;
- Fig. 2:: eine weitere perspektivische Detailansicht der Stapelvorrichtung gemäß Fig. 1 zur Veranschaulichung eines Hubantriebs, in abweichender Orientierung, wobei aus Veranschaulichungsgründen verschiedene Komponenten ausgeblendet sind;
- Fig. 3:: eine weitere perspektivische Detailansicht der Stapelvorrichtung gemäß Fig. 1 zur Veranschaulichung einer Übergabeeinheit mit einem Horizontalantrieb, wobei aus Veranschaulichungsgründen verschiedene Komponenten ausgeblendet sind;
- Fig. 4:: eine auf Fig. 3 basierende perspektivische Detailansicht, wobei die Übergabeeinheit in einer von Fig. 3 abweichenden Betriebsstellung gezeigt ist;
- Fig. 5:: eine vergrößerte Seitenansicht auf Basis der Darstellung in Fig. 4;
- Fig. 6:: eine schematische Seitenansicht einer Ausführungsform eines Automationsmoduls mit einer Stapelvorrichtung sowie einer Handhabungseinheit;
- Fig. 7:: eine weitere Ansicht des Automationsmoduls gemäß Fig. 6, wobei die Stapelvorrichtung in einer von Fig. 6 abweichenden Betriebsstellung gezeigt ist;
- Fig. 8:: eine schematische Seitenansicht einer Ausführungsform eines Fertigungssystems;
- Fig. 9-12:: verschiedene schematische Seitenansichten einer Stapelvorrichtung zur Veranschaulichung einer Stapelsequenz;
- Fig. 13:: ein Diagramm zur Veranschaulichung einer gekoppelten Hubbewegung mit Pilgerschritt-Charakteristik bei einer Ausführungsform einer Stapelvorrichtung;
- Fig. 14:: eine weitere vereinfachte Seitenansicht einer Stapelvorrichtung mit zugeordneter Handhabungseinheit zur Veranschaulichung eines Zugangsbereichs für die Handhabungseinheit;
- Fig. 15:: eine vereinfachte schematische Draufsicht auf eine Stapelvorrichtung mit zwei parallelen Förderpfaden, denen eine Handhabungseinheit zugeordnet ist; und
- Fig. 16:: ein Blockdiagramm zur Veranschaulichung einer Ausführungsform eines Verfahrens zur Beschickung einer Werkzeugmaschine.

Die Erfindung wird in den unabhängigen Ansprüchen definiert. Bevorzugte Ausführungsformen der Erfindung sind in den abhängigen Ansprüchen angegeben.

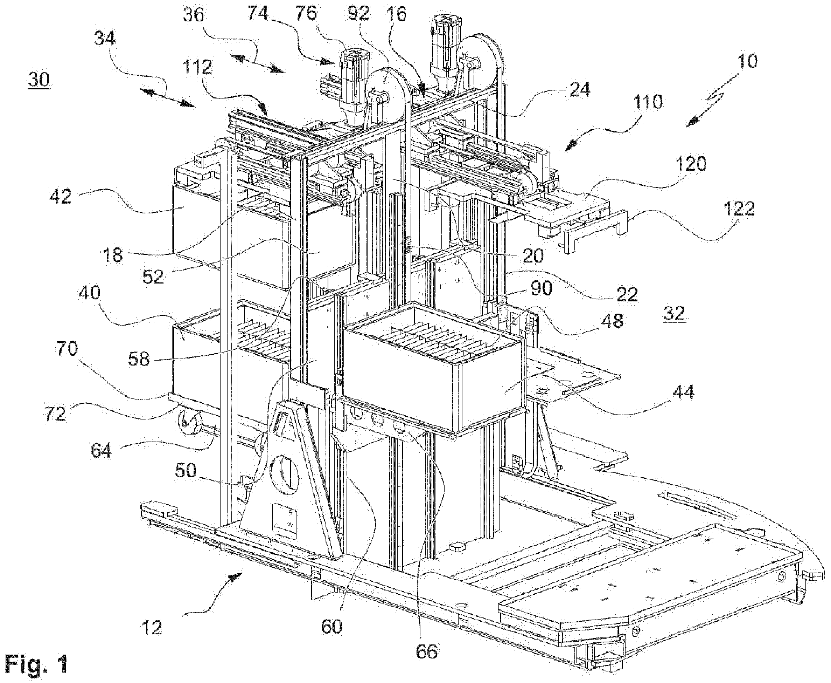

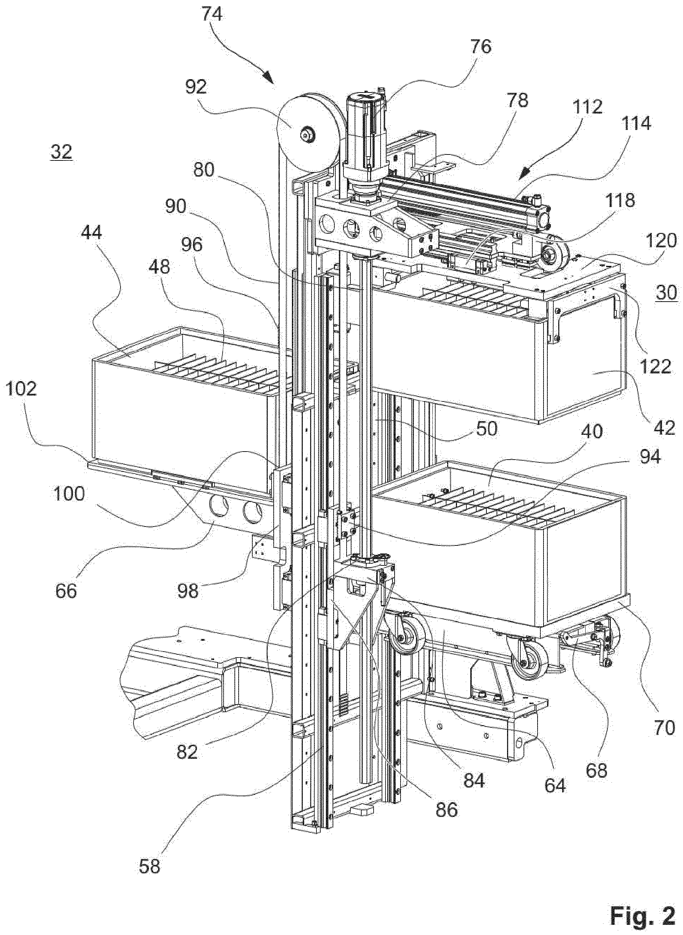

Mit Bezugnahme auf Fig. 1 sowie mit ergänzender Bezugnahme auf die Figuren 2-5 werden beispielhafte Ausgestaltungen, Merkmale und Funktionalitäten einer insgesamt mit 10 bezeichneten Stapelvorrichtung veranschaulicht.

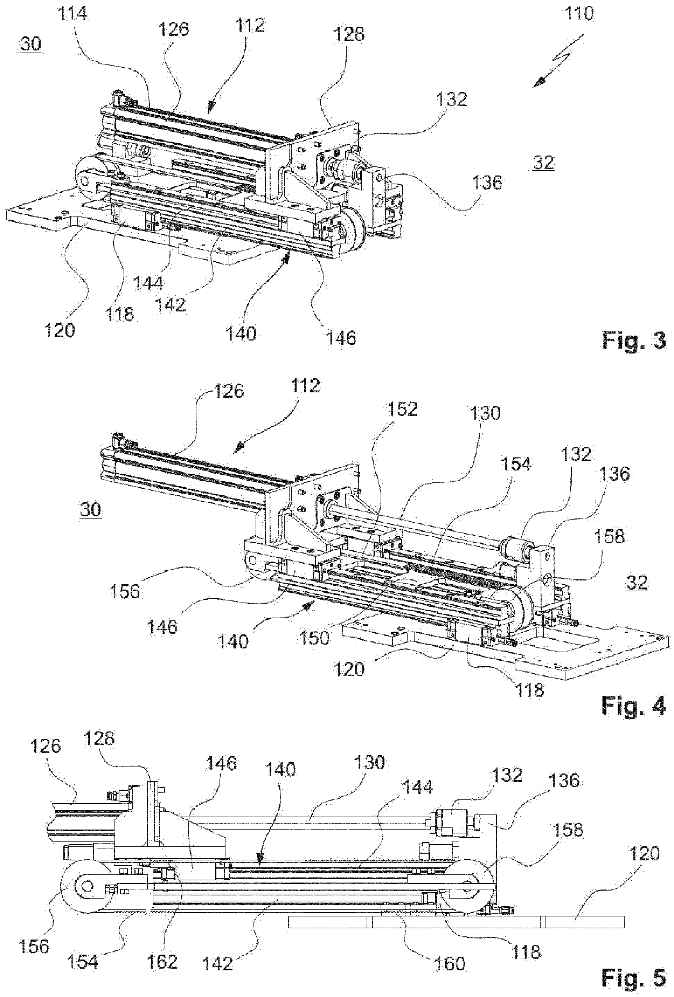

Fig. 1 zeigt eine perspektivische Ansicht einer Stapelvorrichtung 10. Fig. 2 zeigt eine Detailansicht der Stapelvorrichtung 10 in einer von Fig. 1 abweichenden Orientierung. Die Figuren 3-5 veranschaulichen anhand von Detailansichten unterschiedliche Zustände einer Baugruppe der Stapelvorrichtung 10. Die Stapelvorrichtung 10 kann auch als Palettiervorrichtung bzw. als kombinierte Palettierer- und Depalettiervorrichtung 10 bezeichnet werden. Die Stapelvorrichtung 10 eignet sich zur Verwendung in Zusammenhang mit der Automation von Werkzeugmaschinen.

Die Stapelvorrichtung 10 umfasst eine Basis 12, die auch als Gestell oder Rahmen bezeichnet werden kann. Die Basis 12 kann rollbarer oder fahrbar gestaltet sein. Die Basis 12 trägt ein Ständerwerk 16, das im Ausführungsbeispiel vertikal orientierte Ständer 18, 20, 22 sowie eine Traverse 24 umfasst. Die Traverse 24 kann auch als obere Quertraverse bezeichnet werden.

Die Stapelvorrichtung 10 umfasst eine erste Seite 30 und eine zweite Seite 32. Im Ausführungsbeispiel trennt das Ständerwerk 16 die erste Seite 30 und die zweite Seite 32 voneinander. Das Ausführungsbeispiel gemäß Fig. 1 umfasst ferner einen ersten Förderpfad 34 und einen zweiten Förderpfad 36, vergleiche die Doppelpfeile in Fig. 1. Die beiden Förderpfade 34, 36 sind unabhängig voneinander gestaltet. Hinsichtlich der Detailgestaltung sind die Förderpfade 34, 36 ähnlich oder identisch gestaltet, so dass die nachfolgenden Erläuterungen auf beide Förderpfade 34, 36 anwendbar sind.

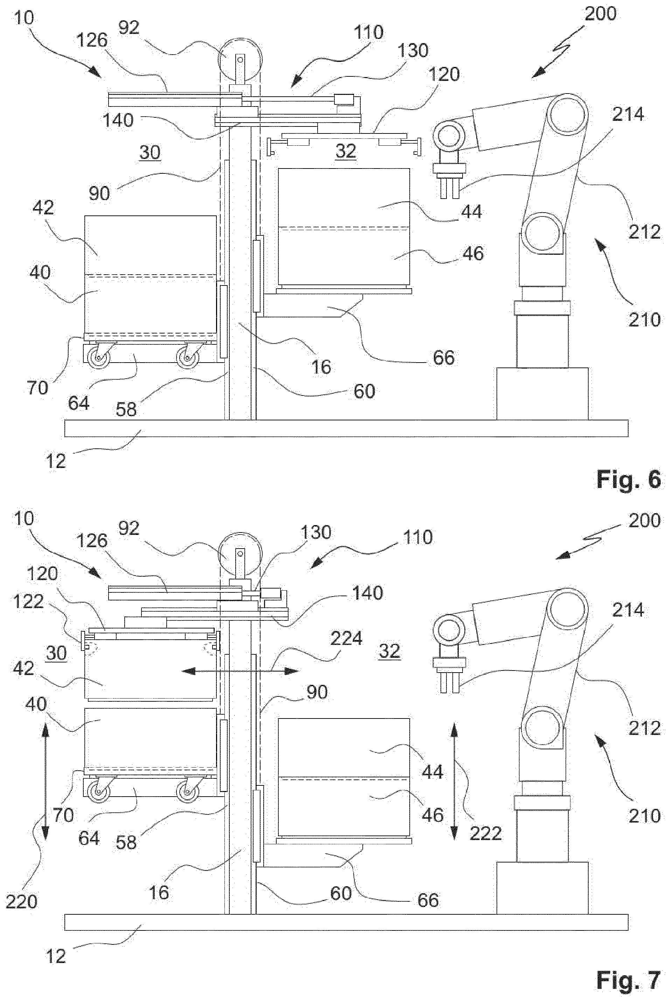

Die Stapelvorrichtung 10 dient zum Transfer von einer Mehrzahl von Ladehilfsmitteln 40, 42, 44, 46 (vergleiche auch die Figuren 6-12) mit darin aufgenommenen Werkstücken zwischen der ersten Seite 30 und der zweiten Seite 32. Die Ladehilfsmittel 40, 42, 44, 46 sind beispielhaft als Paletten, Container, Behälter, Trays und dergleichen ausgeführt. Die Ladehilfsmittel 40, 42, 44, 46 weisen im Ausführungsbeispiel Plätze 48 zur Aufnahme einer Mehrzahl von Werkstücken auf.

Im Ausführungsbeispiel trägt das Ständerwerk 16 eine Trennwand 50, die sich im Wesentlichen vertikal (entlang einer vertikal orientierten Ebene) erstreckt. Die Trennwand 50 trennt die erste Seite 30 und die zweite Seite 32 voneinander. Oberhalb der Trennwand 50 ist eine Übergabeöffnung 52 ausgebildet. Im Ausführungsbeispiel ist jeweils für den ersten Förderpfad 34 und den zweiten Förderpfad 36 eine Übergabeöffnung 52 vorgesehen. Die Übergabeöffnung 52 weist im Ausführungsbeispiel jeweils eine Breite und Höhe auf, die ein Passieren durch ein Ladehilfsmittel 40, 42, 44, 46 ermöglicht. Die Übergabeöffnung 52 ist beispielsweise derart ausgelegt, dass genau ein Ladehilfsmittel 40, 42, 44, 46 passieren kann.

Das Ständerwerk 16 trägt zumindest eine Vertikalführung 58, 60. Im Ausführungsbeispiel ist eine erste Vertikalführung 58 vorgesehen, die der ersten Seite 30 zugewandt ist, vergleiche auch Fig. 2. Ferner ist eine zweite Vertikalführung 60 vorgesehen, die der zweiten Seite 32 zugewandt ist. Jede der Vertikalführungen 58, 60 umfasst im Ausführungsbeispiel zwei Führungsschienen. Dies ist nicht einschränkend zu verstehen. An der ersten Vertikalführung 58 ist ein Tragsegment 64 vertikal verfahrbar angeordnet. An der zweiten Vertikalführung 60 ist eine Hubkonsole 66 vertikal verfahrbar angeordnet.

Im Ausführungsbeispiel (vergleiche Fig. 2) ist dem Tragsegment 64 eine Verriegelung 68 zugeordnet. Das Tragsegment 64 ist dazu ausgebildet, ein Fördermittel 70 zu untergreifen und anzuheben. Die Verriegelung 68 sichert die Position des Fördermittels 70 am Tragsegment 64. Bei dem Fördermittel 70 handelt sich beispielsweise um einen Förderwagen 72. Andere Fördermittel oder Flurfördermittel sind denkbar. Das Fördermittel 70 ist zur Aufnahme eines Stapels von Ladehilfsmitteln 40, 42, 44, 46 ausgebildet und kann mit diesen der ersten Seite 30 der Stapelvorrichtung 10 zugeführt werden. Die Ladehilfsmittel 40, 42, 44, 46 müssen nicht vorher von dem Fördermittel 70 entnommen werden. Die Ladehilfsmittel 40, 42, 44, 46 können gemeinsam mit dem Fördermittel 70 in die Stapelvorrichtung 10 einfahren und dort vom Tragsegment 64 angehoben werden. Im Ausführungsbeispiel untergreift das Tragsegment 64 eine Grundplatte des Förderwagens 72 zwischen dessen Rädern, um den Förderwagen 72 anzuheben.

Die Stapelvorrichtung 10 weist einen Vertikalantrieb 74 auf. Für jeden Förderpfad 34, 36 ist ein Vertikalantrieb 74 vorgesehen. Im Ausführungsbeispiel umfasst der Vertikalantrieb 74 einen Motor 76, der am oberen Ende des Ständerwerks 16 angeordnet ist, beispielsweise in Nachbarschaft zur Traverse 24. Der Motor 76 sitzt auf einer Motorkonsole 78, die gestellfest mit dem Ständerwerk 16 verbunden ist, vergleiche Fig. 2. Der Motor 76 ist beispielhaft als Elektromotor ausgestaltet. Der Motor 76 treibt eine Spindel 80 an, die beispielhaft als Gewindespindel oder Kugelgewindespindel ausgestaltet ist. Die Spindel 80 wirkt im Ausführungsbeispiel mit einer Mitnahmemutter 82 zusammen. Bei einer Rotation der Spindel 80 wird die Mitnahmemutter 82 vertikal verfahren.

Eine vertikal verfahrbare Fahrkonsole 84 trägt die Mitnahmemutter 82. Die Fahrkonsole 84 ist mit dem Tragsegment 64 verbunden und gemeinsam über einen Schlitten 86 an der Vertikalführung 58 vertikal verfahrbar gelagert. Wenn der Motor 76 des Vertikalantriebs 74 angesteuert wird, um die Spindel 80 rotatorisch anzutreiben, bewirkt dies eine Vertikalbewegung der die Mitnahmemutter 82 tragenden Fahrkonsole 84 und infolgedessen eine Vertikalbewegung des Tragsegments 64. Auf diese Weise kann das Fördermittel 70 mitsamt dem darauf angeordneten Stapel von Ladehilfsmitteln 40, 42, 44, 46 angehoben oder abgesenkt werden.

Offenbarungsgemäß ist die Bewegung des Tragsegments 64 auf der ersten Seite 30 mit der Bewegung der Hubkonsole 66 auf der zweiten Seite 32 gekoppelt. Dies erfolgt im Ausführungsbeispiel über ein Koppelglied 90, vergleiche wiederum Fig. 1 und Fig. 2. Das Koppelglied 90 wird im Ausführungsbeispiel über eine Umlenkung 92, beispielsweise eine Umlenkrolle, geführt. Das Koppelglied 90 ist beispielhaft als Zugmittel 96 ausgeführt. Das Zugmittel 96 ist beispielhaft als Zahnriemen, Zugstange, Zugdraht, Litze, Riemen, Kette oder in ähnlicher Weise gestaltet. Nachfolgend wird aus Veranschaulichungsgründen auf die beispielhafte Gestaltung des Zugmittels 96 als Zahnriemen abgestellt.

Fig. 2 veranschaulicht, dass das hier als Zugmittel 96 gestaltete Koppelglied 90 ähnlich eines umgekehrten U unter Verwendung der Umlenkung 92 zwischen der ersten Seite 30 und der zweiten Seite 32 geführt ist. Ein erstes Ende des Koppelgliedes 90 ist durch ein Haltestück 94 zur Bewegungsmitnahme mit dem Schlitten 86 und folglich mit der Fahrkonsole 84 sowie dem Tragsegment 64 verbunden. Ein zweites Ende des Koppelglied 90 ist zur Bewegungsmitnahme mit der Hubkonsole 66 verbunden. Dies erfolgt im Ausführungsbeispiel über ein an einem Schlitten 98 angeordnetes Haltestück 100, das dem zweiten Ende des Koppelglied 90 zugeordnet ist. Der Schlitten 98 der Hubkonsole 66 ist an der zweiten Vertikalführung 60 vertikal verfahrbar angeordnet.

Die Hubkonsole 66 umfasst ferner eine Auflage 102 zur (direkten) Aufnahme von Ladehilfsmitteln 40, 42, 44, 46. Im Ausführungsbeispiel gemäß den Figuren 1 und 2 sind Ladehilfsmittel 40, 42, 44, 46 direkt auf der Auflage 102 der Hubkonsole 66 auf der zweiten Seite 32 angeordnet. Hingegen dient das auf der ersten Seite 30 angeordnete Tragsegment 64 zu indirekten Aufnahme derartiger Ladehilfsmittel 40, 42, 44, 46. Die Ladehilfsmittel 40, 42, 44, 46 sind auf der ersten Seite 30 mittelbar über das Fördermittel 70 auf dem Tragsegment 64 angeordnet bzw. von diesem gehalten.

Neben dem Vertikalantrieb 74 umfasst die Stapelvorrichtung 10 eine Übergabeeinheit 110, die einen Horizontalantrieb 112 aufweist. Die Gestaltung der Übergabeeinheit 110 wird mit ergänzender Bezugnahme auf die Figuren 3-5 veranschaulicht. Die Übergabeeinheit 110 ist oberhalb des Tragsegments 64 und der Hubkonsole 66 angeordnet. Die Übergabeeinheit 110 ist im Ausführungsbeispiel am oberen Ende des Ständerwerks 16 angeordnet, benachbart zur Traverse 24.

Die Übergabeeinheit 110 umfasst den Horizontalantrieb 112. Der Horizontalantrieb 112 umfasst einen Aktuator 114, der im Ausführungsbeispiel als Zylinder oder Linearzylinder gestaltet ist. Bei dem Aktuator 114 kann es sich um einen fluidischen Aktuator handeln. Dies ist nicht einschränkend zu verstehen. Die Übergabeeinheit 110 umfasst ferner einen Horizontalschlitten 118, der durch den Aktuator 114 direkt oder indirekt horizontal verfahrbar ist. Auf diese Weise können Ladehilfsmittel 40, 42, 44, 46, die durch den Vertikalantrieb 74 des Tragsegments 64 bzw. der Hubkonsole 66 vertikal verfahren wurden, horizontal zwischen der ersten Seite 30 und der zweiten Seite 32 ausgetauscht werden.

Im Ausführungsbeispiel trägt der Horizontalschlitten 118 einen Hängeträger 120, der einen Verriegelungsmechanismus 122 aufweist (vergleiche Fig. 1 und Fig. 2). Der Verriegelungsmechanismus 122 ist beispielhaft dazu ausgestaltet, ein (einziges) Ladehilfsmittel 40, 42, 44, 46 formschlüssig und/oder kraftschlüssig zu halten und am Hängeträger 120 zu sichern. Der Hängeträger 120 ist dazu ausgebildet, eine Oberseite eines Ladehilfsmittels 40, 42, 44, 46 zu kontaktieren bzw. einen oberen Bereich des Ladehilfsmittels 40, 42, 44, 46 mit dem Verriegelungsmechanismus 122 zu sichern.

Ähnlich einem Shuttle kann der Hängeträger 120 zwischen der ersten Seite 30 und der zweiten Seite 32 hin und her bewegt werden. Der Hängeträger 120 ist zum Greifen und Halten eines Ladehilfsmittels 40, 42, 44, 46 ausgebildet. Fig. 3 veranschaulicht einen Zustand, bei dem der Hängeträger 120 auf der ersten Seite 30 angeordnet ist. Die Figuren 4 und 5 veranschaulichen einen Zustand, bei dem der Hängeträger 120 auf der zweiten Seite 32 angeordnet ist.

Im Ausführungsbeispiel gemäß den Figuren 3-5 ist die Übergabeeinheit 110 teleskopierbar. Dies hat den Vorteil, dass zumindest in der in Fig. 3 gezeigten Stellung die zweite Seite 32 nicht oder nur unwesentlich durch die Übergabeeinheit 110 blockiert ist. Somit ist die zweite Seite 32 etwa für eine Handhabungseinheit zugänglich, um Werkstücke von einem Ladehilfsmittel 40, 42, 44, 46 zu entnehmen oder an dieses abzugeben.

Im Ausführungsbeispiel weist der Aktuator 114 des Horizontalantriebs 112 ein Gehäuse 126 auf, das auch als Zylinder bezeichnet werden kann. Das Gehäuse 126 ist an einer Halteplatte 128 befestigt, die ihrerseits gestellfest am Ständerwerk 16 festgelegt ist. Der Aktuator 114 umfasst ferner eine Stange 130, die auch als Kolbenstange bezeichnet werden kann. Die Stange 130 kann aus dem Gehäuse 126 ausfahren bzw. in das Gehäuse 126 einfahren. Die Stange 130 weist ein Kopfstück 132 auf, das im Ausführungsbeispiel mit einem Mitnehmer 136 gekoppelt ist. Bei der gestellfesten Anordnung des Gehäuses 126 kann der Mitnehmer 136 über die Stange 130 und das Kopfstück 132 translatorisch horizontal bewegt werden.

Der Mitnehmer 136 ist zur Bewegungsmitnahme mit einer Doppelführung 140 gekoppelt. Wenn der Mitnehmer 136 durch den Aktuator 114 horizontal bewegt wird, wird auch die Doppelführung 140 horizontal bewegt. Die Doppelführung 140 weist einen ersten Führungsabschnitt 142 und einen zweiten Führungsabschnitt 144 auf. Der erste Führungsabschnitt 142 ist mit dem Horizontalschlitten 118 gekoppelt. Der zweite Führungsabschnitt 144 ist mit einer Führungsbasis 146 gekoppelt, die an der Halteplatte 128 bzw. dem Gehäuse 126 des Aktuators 114 festgelegt ist. Im Ausführungsbeispiel ist der erste Führungsabschnitt 142 ein unterer Führungsabschnitt und der zweite Führungsabschnitt 144 ein oberer Führungsabschnitt.

Die Bewegung der Stange 130 und des Kopfstücks 132 bewegt unmittelbar über den Mitnehmer 136 die Doppelführung 140 relativ zur Führungsbasis 146. Im Ausführungsbeispiel weist die Doppelführung 140 zwei zueinander parallele Doppelführungsschienen auf, die über eine Zwischenplatte 150 miteinander verbunden sind.

Die Horizontalführung 118 ist über ein Koppelglied 152, im Ausführungsbeispiel in Form eines Zugmittels 154, funktional mit der Führungsbasis 146 und der Doppelführung 140 gekoppelt. Das Koppelglied 152 kann als Kette, Riemen oder in sonstiger Weise als Zugmittel 154 gestaltet sein. Im Ausführungsbeispiel ist das Zugmittel 154 ein Zahnriemen.

Das Koppelglied 152 ist im Ausführungsbeispiel ein umlaufendes Koppelglied und über zwei Umlenkungen 156, 158 geführt. Die Umlenkungen 156, 158 sind jeweils als Rollen gestaltet. Das Koppelglied 152 ist über ein Haltestück 160 zur Bewegungsmitnahme fest mit dem Horizontalschlitten 118 bzw. dem Hängeträger 120 gekoppelt. Das Koppelglied 152 ist über ein Haltestück 162 zur Bewegungsmitnahme fest mit der Führungsbasis 146 bzw. der Halteplatte 128 gekoppelt. Diese funktionale Kopplung führt dazu, dass einerseits beim Ausfahren des Aktuators 114 über die Stange 130 die Doppelführung 140 direkt translatorisch und horizontal verfahren wird, und dass ferner entlang der Doppelführung 140 zusätzlich der Horizontalschlitten 118 und mit diesem der Hängeträger 120 translatorisch und horizontal verfahren wird, insbesondere richtungsgleich. Auf diese Weise ergibt sich die Teleskopierbewegung der Übergabeeinheit 110. Ein Ladehilfsmittel 40, 42, 44, 46 kann durch die Übergabeeinheit 110 zwischen der ersten Seite 30 (Tragsegment 64) und der zweiten Seite 32 (Hubkonsole 66) verfahren werden.

Die Teleskopierbarkeit der Übergabeeinheit 110 hat den Vorteil, dass wesentliche gestellfeste Komponenten der Übergabeeinheit 110 auf der ersten Seite 30 angeordnet sind, und dass in einer Position des Hängeträgers 120 auf der ersten Seite 30 (vergleiche Fig. 3) die zweite Seite 32 nicht oder nicht übermäßig von der Übergabeeinheit 110 beansprucht wird. Mit anderen Worten steht die zweite Seite 32 für eine Handhabungseinheit oder dergleichen zur Verfügung. Die Übergabeeinheit 110 kann vollständig oder nahezu vollständig auf die erste Seite 30 gefahren werden.

Fig. 6 und Fig. 7 veranschaulichen ein mit 200 bezeichnetes Automationsmodul, das die Stapelvorrichtung 10 und eine Handhabungseinheit 210 aufweist. Im Ausführungsbeispiel nutzen die Stapelvorrichtung 10 und die Handhabungseinheit 210 die gleiche Basis 12. Die Handhabungseinheit 210 ist der zweiten Seite 32 der Stapelvorrichtung 10 zugeordnet. Mit anderen Worten kann die Stapelvorrichtung 10 Ladehilfsmittel 40, 42, 44, 46 zwischen der ersten Seite 30 und der zweiten Seite 32 transferieren, damit die Handhabungseinheit 210 auf der zweiten Seite 32 Werkstücke entnehmen oder ablegen kann.

Die Handhabungseinheit 210 ist beispielhaft als Roboter 212 ausgestaltet, insbesondere als Industrieroboter, Knickarmroboter oder dergleichen. Die Handhabungseinheit 210 umfasst im Ausführungsbeispiel verschiedene relativ zueinander bewegliche (insbesondere verschwenkbare) Glieder. Im Ausführungsbeispiel ist die Handhabungseinheit 210 an der Basis 12 gelagert. Die Handhabungseinheit 210 umfasst einen Werkstückgreifer 214, der ein oberes Ladehilfsmittel 40, 42, 44, 46 eines Stapels von Ladehilfsmitteln 40, 42, 44, 46 auf der zweiten Seite 32 erreichen und dort Werkstücke greifen oder ablegen kann.

In Fig. 6 ist der Hängeträger 120 der Übergabeeinheit 110 an der zweiten Seite 32 positioniert, um dort ein Ladehilfsmittel 40, 42, 44, 46 aufzunehmen oder abzugeben. In Fig. 7 ist der Hängeträger 120 der Übergabeeinheit 110 an der ersten Seite 30 positioniert, um dort ein Ladehilfsmittel 40, 42, 44, 46 aufzunehmen oder abzugeben. Die Übergabeeinheit 110 ist im Ausführungsbeispiel im Wesentlichen auf horizontale Bewegungen des Hängeträgers 120 beschränkt. Fig. 7 veranschaulicht, wie der Verriegelungsmechanismus 122 an ein Ladehilfsmittel 40, 42, 44, 46 angreifen kann, um das Ladehilfsmittel 40, 42, 44, 46 anzuheben und am Hängeträger 120 zu sichern.

Die Bereitstellung der Ladehilfsmittel 40, 42, 44, 46 (des jeweils oberen Ladehilfsmittels 40, 42, 44, 46 des Stapels) durch das Tragsegment 64 erfolgt durch eine Hubbewegung des Tragsegments 64, vergleiche den Doppelpfeil 220 in Fig. 7. Gleichermaßen kann die Bereitstellung der Ladehilfsmittel 40, 42, 44, 46 durch eine Hubbewegung der Hubkonsole 66 erfolgen, vergleiche den Pfeil 222 in Fig. 7. Die Hubbewegungen 220, 222 von Tragsegment 64 und Hubkonsole 66 sind im Ausführungsbeispiel mechanisch zwangsgekoppelt. Zur Kopplung von Tragsegment 64 und Hubkonsole 66 ist ein Koppelglied 90 vorgesehen (in den Figuren 6 und 7 lediglich durch gestrichelte Linien angedeutet).Um das Maß, wie das Tragsegment 64 angehoben wird, wird die Hubkonsole 66 abgesenkt, und umgekehrt.

Die Übergabeeinheit 110 kann den Hängeträger 120 horizontal verfahren, vergleiche den Pfeil 224. Da im Ausführungsbeispiel der Hängeträger 120 der Übergabeeinheit 110 nicht vertikal verfahrbar ist, sind Hubbewegungen 220, 222 von Tragsegment 64 bzw. Hubkonsole 66 auch bei der unmittelbaren Übergabe mit dem Hängeträger 120 erforderlich. Die Hubbewegungen 220, 222 werden durch einen einzigen Vertikalantrieb 74 (Fig. 1 und Fig. 2) erzeugt.

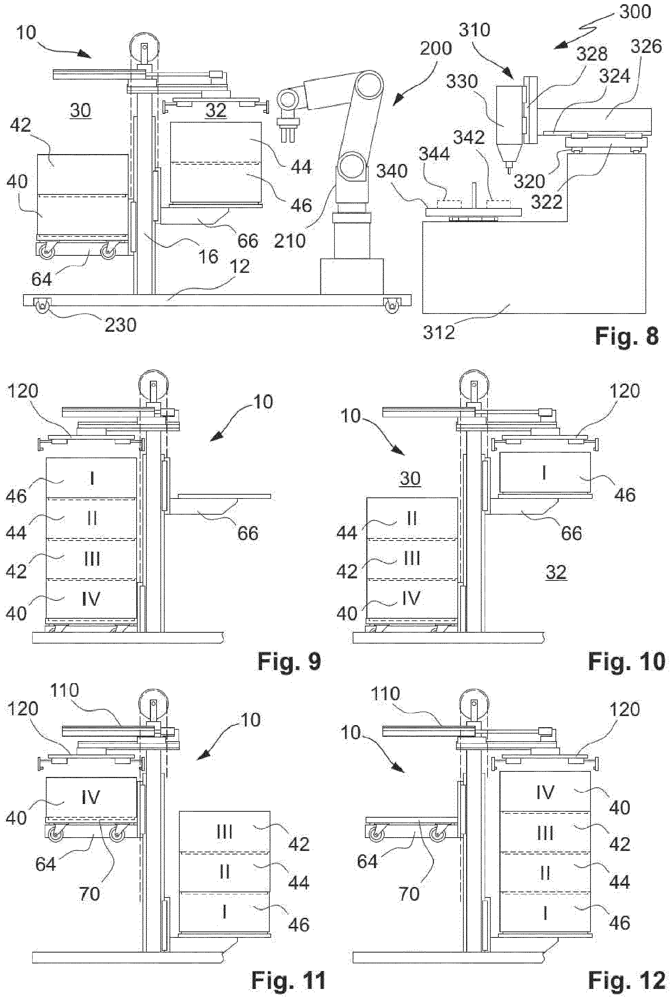

Fig. 8 veranschaulicht ein mit 300 bezeichnetes Fertigungssystem. Das Fertigungssystem 300 umfasst eine Werkzeugmaschine 310 und ein Automationsmodul 200, das mit der Werkzeugmaschine 310 gekoppelt ist. Das Automationsmodul 200 umfasst eine Handhabungseinheit 210 sowie eine Stapelvorrichtung
10. Die Basis 12 der Stapelvorrichtung 10 ist im Ausführungsbeispiel verfahrbar gestaltet und mit einem Fahrwerk 230 versehen. Auf diese Weise kann das Automationsmodul 200 bedarfsweise mit der Werkzeugmaschine 310 gekoppelt werden, um den Ladevorgang zu automatisieren.

Die Werkzeugmaschine 310 umfasst ein Bett 312, das eine Horizontalführung 320 trägt, die einen Schlitten 322 trägt, der eine Horizontalführung 324 trägt. Die Horizontalführungen 320 und 324 sind senkrecht zueinander orientiert. Die Horizontalführung 324 ist einem weiteren Schlitten 326 zugeordnet, der eine Vertikalführung 328 trägt. Eine Werkzeugspindel 330 ist vertikal verfahrbar an der Vertikalführung 328 aufgenommen. Die Werkzeugspindel 330 ist zur Aufnahme eines Bearbeitungswerkzeugs ausgebildet. Die Werkzeugspindel 330 ist über die Führungen 320, 324, 328 in drei Achsen relativ zu einem Werkstücktisch 340 verfahrbar. Im Ausführungsbeispiel ist der Werkstücktisch 340 zur Aufnahme von Werkstücken 342, 344 ausgebildet. Beispielsweise umfasst der Werkstücktisch 340 Plätze für zwei Werkstücke 342, 344, wobei der Werkstücktisch 340 rotierbar ist, so dass sich jeweils ein Werkstück 342, 344 in einer Bereitstellungsposition und ein anderes in einer Bearbeitungsposition befindet. Dies ist nicht einschränkend zu verstehen.

Die Handhabungseinheit 210 kann Werkstücke 342, 344 zwischen der zweiten Seite 32 der Stapelvorrichtung 10 und der Werkzeugmaschine 310 transferieren. Auf diese Weise lässt sich ein teilautomatisierter oder hochautomatisierter Ladevorgang realisieren. Von Vorteil ist in diesem Zusammenhang, dass die Stapelvorrichtung 10 auch als Pufferspeicher dienen kann. Werkstücke 342, 344 in vereinzelter Form werden zwischen der zweiten Seite 32 der Stapelvorrichtung 10 und der Werkzeugmaschine 310 ausgetauscht. Ein Austausch von Werkstücken 342, 344 mit der Umgebung erfolgt Chargenweise unter Nutzung der Ladehilfsmittel 40, 42, 44, 46 über die erste Seite 30 der Stapelvorrichtung 10.

Mit Bezugnahme auf die Figuren 9-12 wird ein Betriebsmodus der Stapelvorrichtung 10 veranschaulicht. In Fig. 9 ist ein vollständiger Stapel aus vier Ladehilfsmitteln 40, 42, 44, 46 (I-IV) auf der ersten Seite 30 angeordnet. Unter Nutzung der Hubbewegungen (220, 222 in Fig. 7) sowie der Horizontalbewegung (224 in Fig. 7) wird der Stapel schrittweise abgebaut, wobei einzelne Ladehilfsmittel 40, 42, 44, 46 vom Hängeträger 120 der Übergabeeinheit 110 übernommen und von der ersten Seite 30 zur zweiten Seite 32 umgesetzt werden (vergleiche Fig. 10 und Fig. 11). Schrittweise wird das Tragsegment 64 auf der ersten Seite 30 angehoben, um die verbliebene Ladehilfsmittel 40, 42, 44, 46 (I-IV) der Übergabeeinheit 110 zuzuführen. Aufgrund der gekoppelten Bewegung wird die Hubkonsole 66 auf der zweiten Seite 32 schrittweise abgesenkt. Auf diese Weise steht auf der zweiten Seite 32 genügend Raum zur Aufnahme der Ladehilfsmittel 40, 42, 44, 46 (I-IV) zur Verfügung.

Das Ladehilfsmittel (vergleiche Bezeichnung I in den Figuren 9-12), das im Stapel auf dem Tragsegment 64 auf der ersten Seite 30 oben angeordnet ist, wird als erstes transferiert und steht folglich im Stapel auf der Hubkonsole 66 auf der zweiten Seite 62 unten. Die Reihenfolge (oben-unten) ändert sich folglich bei der Umlagerung zwischen der ersten Seite 30 und der zweiten Seite 32. Dies lässt sich derart nutzen, das beispielsweise bei der Bereitstellung eines Stapels aus Ladehilfsmitteln 40, 42, 44, 46 mit neuen, zu bearbeitenden Werkstücken an der ersten Seite 30 zunächst der Stapel vollständig auf die zweite Seite 32 umgelagert wird. Dort werden dann ausgehend von dem oberen Ladehilfsmittel 40, 42, 44, 46 (in Fig. 12 IV) Werkstücke durch die Handhabungseinheit 210 vereinzelt und entnommen und der Bearbeitung in der Werkzeugmaschine 310 zugeführt.

Auf diese Weise kann das obere Ladehilfsmittel 40, 42, 44, 46 eines Stapels allmählich entleert werden. Es ist auch vorstellbar, unbearbeitete Werkstücke durch bearbeitete Werkstücke zu ersetzen. Wenn das obere Ladehilfsmittel 40, 42, 44, 46 auf der zweiten Seite 32 vollständig abgearbeitet ist, kann eine Rückführung hin zur ersten Seite 30 zum Tragsegment 64 erfolgen. Das Ladehilfsmittel 40, 42, 44, 46 kann dort auf dem Fördermittel 70 abgestellt werden. Auf diese Weise kann der Stapel von Ladehilfsmitteln 40, 42, 44, 46 auf der zweiten Seite 32 Stück für Stück abgearbeitet werden.

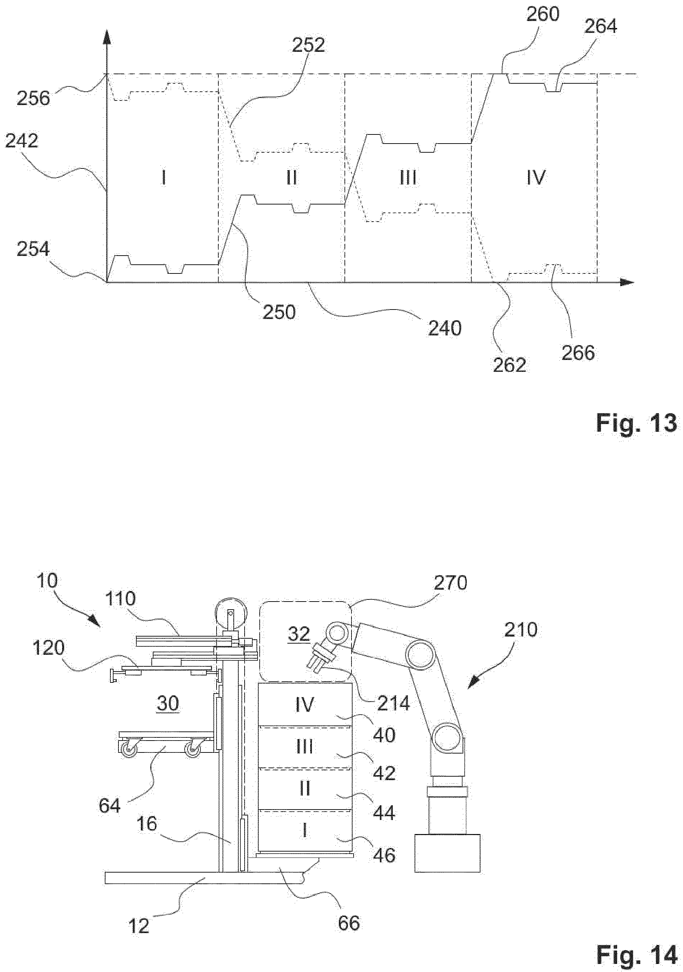

Die Hubbewegung von Tragsegment 64 und Hubkonsole 66 weist im Ausführungsbeispiel eine gegenläufige Schrittcharakteristik auf. Fig. 13 veranschaulicht in Zusammenhang mit den Figuren 6, 7 und 9-12 eine beispielhafte Pilgerschritt-Charakteristik. Vorstehend wurde bereits angedeutet, dass die Übergabeeinheit 110 mit dem Hängeträger 120 in bestimmten Ausgestaltungen ausschließlich horizontal verfahrbar ist. Demgemäß erfolgen sowohl eine Bereitstellung (Zuführung) als auch Hubbewegungen zur Übergabe bzw. Übernahme von Ladehilfsmitteln 40, 42, 44, 46 durch Vertikalbewegungen von Tragsegment 64 und Hubkonsole 66. Aufgrund der Zwangskopplung ergibt sich eine symmetrische Gestaltung.

Fig. 13 zeigt ein Diagramm. Die Abszisse 240 beschreibt die Zeit. Die Ordinate 242 beschreibt eine jeweilige Vertikalposition (Hubposition). Das Diagramm ist in Segmente I-IV unterteilt. Die Segmente I-IV beziehen sich jeweils auf die Handhabung eines der mit I-IV gekennzeichneten Ladehilfsmittels 40, 42, 44, 46 in den Figuren 9-12. Eine Kurve 250 beschreibt die aktuelle Hubposition des Tragsegments 64. Eine spiegelverkehrte Kurve 252 beschreibt die zugehörige Hubposition der Hubkonsole 66. Das Bezugszeichen 254 bezeichnet eine Ausgangsposition des Tragsegments 64, das Bezugszeichen 256 bezeichnet eine Ausgangsposition der Hubkonsole 66, vergleiche Fig. 9.

Die Bewegungen von Tragsegment 64 und Hubkonsole 66 in den Segmenten I-IV sind jeweils charakteristisch und spiegelverkehrt zueinander. Beispielhaft wird mit Bezug auf das Segment IV der Transfer des unteren Ladehilfsmittels 40 auf dem Fördermittel 70 am Tragsegment 64 beschrieben, vergleiche Fig. 11 und 12. Das Tragsegment 64 wird ausgehend von der zuvor im Segment III eingenommenen Hubposition weiter angehoben, wenn das entsprechende Ladehilfsmittel 42 (III) an die zweite Seite 32 abgegeben wurde. Das Bezugszeichen 260 beschreibt einen Hub, bei dem das Ladehilfsmittel 40 soweit an den Hängeträger 120 der Übergabeeinheit 110 herangefahren ist, dass eine Übernahme durch den Hängeträger 120 ermöglicht ist. Da jedoch die Ladehilfsmittel 40, 42, 44, 46 im Ausführungsbeispiel miteinander und gegebenenfalls mit dem Fördermittel 70 verschachtelt sind, ist ausgehend von dieser extremen Hubposition (Übergabehub 260) ein leichtes Absenken des Tragsegments 64 erforderlich. Der Übergabehub 260 spiegelt sich in einem Gegenhub 262 auf Seiten der Hubkonsole 66.

Nach dem Zurücksetzen (Absenken) des Tragsegments 64 steht genügend Raum bereit, so dass die Übergabeeinheit 110 mit dem Hängeträger 120 das Ladehilfsmittel 40 (I) horizontal von der ersten Seite 30 auf die zweite Seite 32 verfahren kann. Würde das Ladehilfsmittel 40 (I) dort ohne weitere Maßnahmen vom Hängeträger 120 gelöst werden, würde das Ladehilfsmittel 40 (I) ein Stück weit herunterfallen. Daher wird nunmehr die Hubkonsole 66 ein Stück angehoben (Übernahmehub 266), so dass das Ladehilfsmittel 40 (I) nahtlos auf dem bereitstehenden Stapel von Ladehilfsmitteln 42, 44, 46 (II-IV) abgesetzt werden kann. Der Übernahmehub 266 auf Seiten der Hubkonsole 66 spiegelt sich in einem Gegenhub 264 auf Seiten des Tragsegments 64. Damit die Übergabeeinheit 110 mit dem Hängeträger 120 freigegeben wird und zurück auf die erste Seite 30 fahren kann, wird die Hubkonsole 66 schlussendlich erneut etwas abgesenkt. Dadurch ergibt sich insgesamt eine Pilgerschritt-Charakteristik. Die eigentlich kontinuierliche Hubbewegung (ohne Wechsel beim Vorzeichen der Steigung) wird zumindest kurzzeitig durch eine gegenläufige Hubbewegung (kurzzeitiger Wechsel beim Vorzeichen der Steigung) unterbrochen.

Fig. 14 basiert auf Fig. 12 und veranschaulicht einen freien Raum 270 oberhalb des Stapels von Ladehilfsmitteln 40, 42, 44, 46, der sich ergibt, wenn die Übergabeeinheit 110 mit dem Hängeträger 120 auf die erste Seite 30 zurück bewegt wurde. Die Oberseite des Stapels von Ladehilfsmitteln 40, 42, 44, 46 ist für die Handhabungseinheit 210 gut zugänglich, so dass der Greifer 214 Werkstücke entnehmen oder ablegen kann. Der freie Raum 270 resultiert auch aus der Teleskopierbarkeit der Übergabeeinheit 110, die im Ausführungsbeispiel im eingezogenen Zustand des Horizontalantriebs 112 vollständig oder nahezu vollständig auf der ersten Seite 30 angeordnet ist.

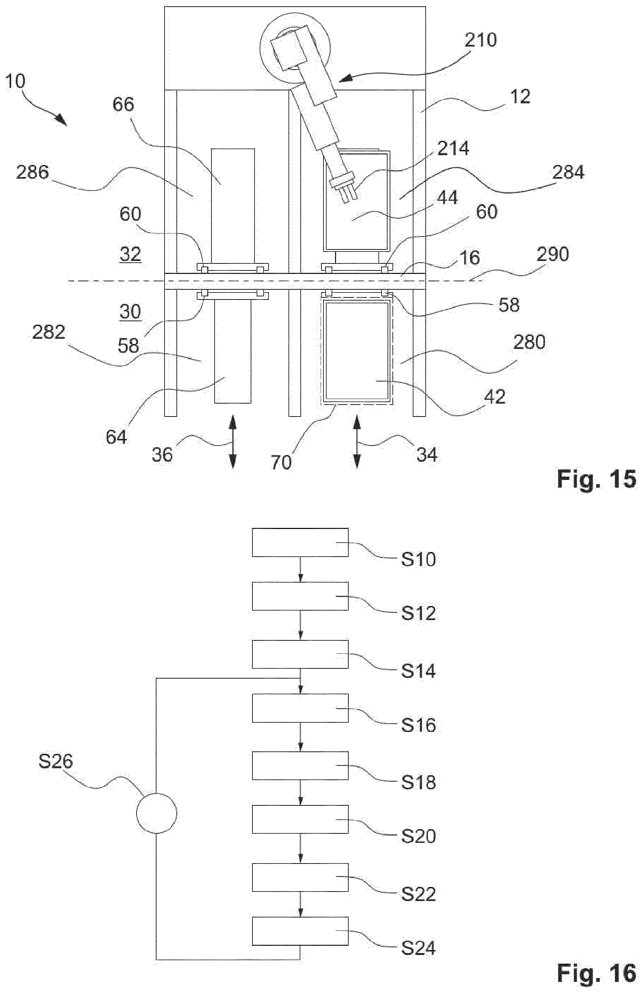

Mit Bezugnahme auf Fig. 15 wird anhand einer Draufsicht auf eine Stapelvorrichtung 10 mit zugeordneter Handhabungseinheit 210 eine zweikanalige Ausgestaltung veranschaulicht. Vergleiche hierzu Fig. 1. Die Stapelvorrichtung 10 weist einen ersten Förderpfad 34 und einen zweiten Förderpfad 36 auf, die im Ausführungsbeispiel funktional und räumlich parallel zueinander orientiert sind. Jeder der Förderpfade 34, 36 erstreckt sich zwischen der ersten Seite 30 und der zweiten Seite 32. Der erste Förderpfad 34 umfasst auf der ersten Seite 30 einen Aufnahmeplatz 280. Der zweite Förderpfad 36 umfasst auf der ersten Seite 30 einen Aufnahmeplatz 282. Jedem der Aufnahmeplätze 280, 282 kann ein Fördermittel 70 mit daran aufgenommenen Ladehilfsmitteln 40, 42, 44, 46 zugeführt und dort auf einem Tragsegment 64 aufgenommen und bedarfsweise angehoben werden. Dies kann bei den Aufnahmeplätzen 280, 282 unabhängig voneinander erfolgen.

Der erste Förderpfad 34 umfasst auf der zweiten Seite 32 einen Bereitstellungsplatz 284. Der zweite Förderpfad 36 umfasst auf der zweiten Seite 32 einen Bereitstellungsplatz 286. Dort ist jeweils eine vertikal verfahrbare Hubkonsole 66 vorgesehen, die zur Aufnahme eines Stapels von Ladehilfsmitteln 40, 42, 44, 46 ausgebildet ist. Die Ladehilfsmittel 40, 42, 44, 46 können innerhalb eines Förderpfades 34, 36 zwischen der ersten Seite 30 und der zweiten Seite 32 transferiert werden. Im Ausführungsbeispiel ist kein Wechsel eines Ladehilfsmittels 40, 42, 44, 46 zwischen den Förderpfaden 34, 36 möglich. Das Ständerwerk 16 definiert eine Trennebene 290 zwischen der ersten Seite 30 und der zweiten Seite 32.

Die Nutzung zweier Förderpfade 34, 36 mit jeweils einem Aufnahmeplatz 280, 282 und einem Bereitstellungsplatz 284, 286 erhöht die Flexibilität, Redundanz und Leistungsfähigkeit der Stapelvorrichtung 10. Es lassen sich auf diese Weise weitere Anwendungsfälle abdecken. Beispielhaft dient einer der beiden Förderpfade 34, 36 zur Versorgung mit unbearbeiteten Werkstücken, wobei der jeweils andere der beiden Förderpfade 34, 36 zur Abführung bearbeiteter Werkstücke dient. Dies ist nicht einschränkend zu verstehen. Es ist auch vorstellbar, dass sowohl unbearbeitete als auch bearbeitete Werkstücke entlang ein und desselben Förderpfades 34, 36 hin und her geführt werden. Im Ausführungsbeispiel werden beide Förderpfade 34, 36, insbesondere beide Bereitstellungsplätze 284, 286 auf der zweiten Seite 32 durch ein und dieselbe Handhabungseinheit 210 bedient. Dies ist nicht einschränkend zu verstehen.

Mit Bezugnahme auf Fig. 16 wird anhand eines Blockdiagramms eine Ausführungsform eines Verfahrens zur Beschickung einer Werkzeugmaschine mit Werkstücken veranschaulicht. Ein erster Schritt S10 umfasst die Bereitstellung einer Stapelvorrichtung gemäß zumindest einer der hierin beschriebenen Ausgestaltungen. Insbesondere weist die Stapelvorrichtung ein vertikal verfahrbares Tragsegment zur Aufnahme eines Fördermittels mit einer Mehrzahl von Ladehilfsmitteln auf, das mit einer vertikal verfahrbaren Hubkonsole zur Aufnahme eines Stapels von Ladehilfsmitteln zwangsgekoppelt ist.

Ein weiterer Schritt S12 umfasst die Zuführung eines Fördermittels mit einem Stapel von Ladehilfsmitteln. Das Fördermittel kann angetrieben oder antriebslos sein. Das Fördermittel wird beispielhaft einem Aufnahmeplatz auf einer ersten Seite der Stapelvorrichtung zugeführt und dort oberhalb eines Tragsegments platziert. Es kann sich ein Schritt S14 anschließen, der ein Untergreifen des Fördermittels mit den darauf angeordneten Ladehilfsmitteln durch das Tragsegment umfasst.

In einem weiteren Schritt S16 wird das Tragsegment mitsamt etwaigen darauf angeordneten Ladehilfsmitteln angehoben, um ein oberes Ladehilfsmittel einer Übergabeeinheit, insbesondere einem dortigen Hängeträger, zuzuführen. Diese Hubbewegung führt zu einer zwangsgekoppelten Vertikalbewegung einer Hubkonsole auf der gegenüberliegenden, zweiten Seite der Stapelvorrichtung. Wenn das obere Ladehilfsmittel nahe genug am Hängeträger positioniert ist, kann das Ladehilfsmittel in einem Schritt S18 durch den Hängeträger gegriffen und gesichert werden, beispielsweise unter Nutzung eines Verriegelungsmechanismus am Hängeträger, der an das Ladehilfsmittel formschlüssig und/oder kraftschlüssig angreift. Hiernach kann das Tragsegment etwas nach unten zurückgesetzt werden, um das obere Ladehilfsmittel freizugeben.

In einem sich anschließenden Schritt S20 wird das vom Hängeträger gehaltene Ladehilfsmittel durch die Übergabeeinheit horizontal von der ersten Seite zur zweiten Seite verfahren. Durch die gekoppelte Hubbewegung befindet sich die Hubkonsole zur Übernahme des Ladehilfsmittels bereits in einer günstigen Ausgangsstellung. Es kann sich ein Schritt S22 anschließen, der einen Übernahmehub der Hubkonsole in Richtung auf das Ladehilfsmittel am Hängeträger umfasst, um das Ladehilfsmittel nahtlos vom Hängeträger übernehmen zu können. Die Übernahme durch die Hubkonsole erfolgt in einem Schritt S24, dieser kann ein begrenztes Zurücksetzen der Hubkonsole umfassen, um dem Hängeträger der Übergabeeinheit eine Rückkehr von der zweiten Seite zur ersten Seite zu ermöglichen.

Im Ausführungsbeispiel ist ein Zähler (Bezugszeichen S26) vorgesehen, der gewährleistet, dass die Schritte S16-S24 mehrmals durchlaufen werden, entsprechend der Anzahl der zwischen der ersten Seite und der zweiten Seite umzusetzenden Ladehilfsmittel. Schlussendlich werden im Ausführungsbeispiel sämtliche Ladehilfsmittel, die über das Fördermittel auf der ersten Seite bereitgestellt werden, auf die zweite Seite überführt. Dort können sich unter Zuhilfenahme einer Handhabungseinheit eine Vereinzelung und ein Transfer zwischen der zweiten Seite und einer Werkzeugmaschine anschließen. Wenn die bearbeiteten Werkstücke nach der Bearbeitung erneut an die Ladehilfsmittel übergeben werden, kann das Verfahren zumindest abschnittsweise rückwärts durchlaufen werden, um die Ladehilfsmittel von der zweiten Seite zurück auf die erste Seite zu überführen und dort auf dem Fördermittel abzulegen. Ähnliches kann erfolgen, wenn bearbeitete Werkstücke anderweitig abgeführt und stattdessen leere Ladehilfsmittel zurück auf die erste Seite überführt werden.

## Patentansprüche

1. Automationsmodul mit einer Stapelvorrichtung (10) zur Handhabung von Ladehilfsmitteln (40, 42, 44, 46) zur automatisierten Beschickung einer Werkzeugmaschine (300), insbesondere für einen automatisierten Werkstückwechsel, und mit einer Handhabungseinheit (210), die dazu ausgebildet ist, Werkstücke (342, 344) zwischen einem durch die Stapelvorrichtung (10) bereitgestellten Ladehilfsmittel (40, 42, 44, 46) und der Werkzeugmaschine (300) zu transferieren, wobei die Stapelvorrichtung (10) Folgendes aufweist:
- eine Basis (12),
- ein Ständerwerk (16), das von der Basis (12) gehalten ist,
- eine erste Seite (30) mit einem vertikal verfahrbaren Tragsegment (64) zur Aufnahme eines Fördermittels (70), das zwei oder mehr übereinander angeordnete Ladehilfsmittel (40, 42, 44, 46) trägt, die einen Stapel bilden, und
- eine zweite Seite (32) mit einer vertikal verfahrbaren Hubkonsole (66) zur Aufnahme zumindest eines Ladehilfsmittels (40, 42, 44, 46), wobei die Hubkonsole (66) dazu ausgebildet ist, zwei oder mehr übereinander angeordnete Ladehilfsmittel (40, 42, 44, 46) zu tragen, die einen Stapel bilden, **dadurch gekennzeichnet, dass** das Ständerwerk (16) zumindest eine erste Vertikalführung (58) und zumindest eine zweite Vertikalführung (60) trägt, wobei die erste Vertikalführung (58) der ersten Seite (30) zugeordnet ist, und wobei das Tragsegment (64) entlang der ersten Vertikalführung (58) verfahrbar ist, wobei die zweite Vertikalführung (60) der zweiten Seite (32) zugeordnet ist, und wobei die Hubkonsole (66) entlang der zweiten Vertikalführung (60) am Ständerwerk (16) verfahrbar ist, wobei das Tragsegment (64) und die Hubkonsole (66) voneinander abgewandt am Ständerwerk (16) angeordnet sind, und
wobei das Tragsegment (64) und die Hubkonsole (66) über ein gemeinsames Koppelglied (90) miteinander zwangsgekoppelt und über einen gemeinsamen Vertikalantrieb (74) gegenläufig am Ständerwerk (16) vertikal verfahrbar sind.

2. Automationsmodul nach Anspruch 1, wobei das Tragsegment (64) und die Hubkonsole (66) bei der Überführung des Stapels von Ladehilfsmitteln (40, 42, 44, 46) zwischen der ersten Seite (30) und der zweiten Seite (32) mit Pilgerschritt-Charakteristik vertikal verfahrbar sind, und wobei die Übergabe eines Ladehilfsmittels (40, 42, 44, 46) zwischen der ersten Seite (30) und der zweiten Seite (32) durch eine Horizontalbewegung erfolgt.

3. Automationsmodul nach Anspruch 1 oder 2, wobei das Koppelglied (90) als Zugmittel (96) ausgebildet ist, und wobei die gemeinsamen Vertikalbewegungen (220, 222) des Tragsegments (64) und der Hubkonsole (66) jeweils einen betragsmäßig gleichen Hub umfassen.

4. Automationsmodul nach einem der Ansprüche 1-3, wobei das Tragsegment (64) zum Untergreifen und Anheben eines rollbaren Fördermittels (70) ausgestaltet ist, das zur Aufnahme des Stapels übereinander angeordneter Ladehilfsmittel (40, 42, 44, 46) ausgebildet ist, und dass die Hubkonsole (66) eine Auflage (102) zur direkten Aufnahme des Stapels von Ladehilfsmitteln (40, 42, 44, 46) aufweist.

5. Automationsmodul nach einem der Ansprüche 1-4, wobei der Vertikalantrieb (74) auf das Tragsegment (64) einwirkt, um das Tragsegment (64) und mittelbar die Hubkonsole (66) einander entgegengerichtet mit einer Schrittcharakteristik oder Pilgerschritt-Charakteristik vertikal zu verfahren.

6. Automationsmodul nach einem der Ansprüche 1-5, wobei die Stapelvorrichtung (10) ferner eine Übergabeeinheit (110) aufweist, die dazu ausgebildet ist, ein Ladehilfsmittel (40, 42, 44, 46) zwischen der ersten Seite (30) und der zweiten Seite (32) zu transferieren, wobei am Ständerwerk (16) eine für die Übergabeeinheit (110) passierbare Übergabeöffnung (52) ausgebildet ist, die für ein Ladehilfsmittel (40, 42, 44, 46) passierbar ist, und wobei die Übergabeeinheit (110) insbesondere einen Hängeträger (120) mit einem Verriegelungsmechanismus (122) zum Greifen und Halten eines Ladehilfsmittels (40, 42, 44, 46) umfasst.

7. Automationsmodul nach Anspruch 6, wobei der gemeinsame Vertikalantrieb (74) des Tragsegments (64) und der Hubkonsole (66) gezielt angesteuert wird, um eine gewünschte Vertikalposition in Bezug auf die Übergabeeinheit (110) für die Aufnahme oder Abgabe eines Ladehilfsmittels (40, 42, 44, 46) anzufahren.

8. Automationsmodul nach Anspruch 6 oder 7, wobei die Übergabeeinheit (110) einen Horizontalantrieb (112) aufweist, der zumindest dann im Wesentlichen auf der ersten Seite (30) angeordnet ist, wenn der Horizontalantrieb (112) die erste Seite (30) angefahren hat.

9. Automationsmodul nach Anspruch 8, wobei die Übergabeeinheit (110) in einer ersten Position auf der ersten Seite (30) derart positioniert ist, dass ein auf der zweiten Seite (32) von der Hubkonsole (66) getragenes Ladehilfsmittel (40, 42, 44, 46) von oben für eine Handhabungseinheit (210) frei zugänglich ist.

10. Automationsmodul nach einem der Ansprüche 6-9, wobei die Übergabeeinheit (110) einen in einer konstanten Vertikalpositionen horizontal verfahrbaren Horizontalschlitten (118) aufweist.

11. Automationsmodul nach Anspruch 10, wobei die Übergabeeinheit (110) horizontal teleskopierbar ist und eine relativ zu einer Führungsbasis (146) verfahrbare Doppelführung (140) mit zwei parallelen Führungsabschnitten (142, 144) aufweist, von denen einer der Führungsbasis (146) und ein anderer dem Horizontalschlitten (118) zugeordnet ist, und wobei der Horizontalschlitten (118), die Führungsbasis (146) und die Doppelführung (140) insbesondere über ein Zugmittel (154) derart miteinander gekoppelt sind, dass bei einer Bewegung der Doppelführung (140) relativ zur Führungsbasis (146) der Horizontalschlitten (118) relativ zur Doppelführung (140) bewegt wird.

12. Automationsmodul nach einem der Ansprüche 1-11, wobei auf der ersten Seite (30) und auf der zweiten Seite (32) jeweils zwei Plätze (280, 282; 284, 286) zur Aufnahme eines Stapels von Ladehilfsmitteln (40, 42, 44, 46) ausgebildet sind, und wobei die beiden Stapel unabhängig voneinander ansteuerbar und verfahrbar sind.

13. Fertigungssystem mit einer Werkzeugmaschine (300) und einem Automationsmodul (200) nach einem der Ansprüche 1-12.

14. Verfahren zur Beschickung einer Werkzeugmaschine (300), insbesondere für einen automatisierten Werkstückwechsel, mit folgenden Schritten:
- Bereitstellung einer Stapelvorrichtung (10), die eine Basis (12), ein Ständerwerk (16), das von der Basis (12) gehalten ist, eine erste Seite (30) mit einem vertikal verfahrbaren Tragsegment (64) zur Aufnahme eines Fördermittels (70), das zwei oder mehr übereinander angeordnete Ladehilfsmittel (40, 42, 44, 46) trägt, eine zweite Seite (32) mit einer vertikal verfahrbaren Hubkonsole (66) zur Aufnahme zumindest eines Ladehilfsmittels (40, 42, 44, 46), die dazu ausgebildet ist, zwei oder mehr übereinander angeordnete Ladehilfsmittel (40, 42, 44, 46) zu tragen, und eine Übergabeeinheit (110) aufweist, die dazu ausgebildet ist, ein Ladehilfsmittel (40, 42, 44, 46) zwischen der ersten Seite (30) und der zweiten Seite (32) horizontal zu transferieren,
- Zuführen eines Fördermittels (70), das einen Stapel aus zumindest zwei übereinander angeordneten Ladehilfsmitteln (40, 42, 44, 46) trägt, zur ersten Seite (30),
- Aufnahme des Fördermittels (70) mit den Ladehilfsmitteln (40, 42, 44, 46) durch das Tragsegment (64),
- vertikales Verfahren des Tragsegments (64),
- horizontales Verfahren des Ladehilfsmittels (40, 42, 44, 46) mit der Übergabeeinheit (110) von der ersten Seite (30) auf die zweite Seite (32), und
- vertikales Verfahren der Hubkonsole (66) derart, dass das Ladehilfsmittel (40, 42, 44, 46) als oberes Ladehilfsmittel (40, 42, 44, 46) von der Übergabeeinheit (110) auf der Hubkonsole (66) oder auf einem dort bereits bereitstehenden Ladehilfsmittel (40, 42, 44, 46) absetzbar ist, dadurch gekenzeichnet, dass
- das Ständerwerk (16) zumindest eine erste Vertikalführung (58) und zumindest eine zweite Vertikalführung (60) trägt, wobei die erste Vertikalführung (58) der ersten Seite (30) zugeordnet ist, und wobei das Tragsegment (64) entlang der ersten Vertikalführung (58) verfahrbar ist, wobei die zweite Vertikalführung (60) der zweiten Seite (32) zugeordnet ist, und wobei die Hubkonsole (66) entlang der zweiten Vertikalführung (60) am Ständerwerk (16) verfahrbar ist, wobei das Tragsegment (64) und die Hubkonsole (66) voneinander abgewandt am Ständerwerk (16) angeordnet sind, und wobei das Tragsegment (64) und die Hubkonsole (66) über ein gemeinsames Koppelglied (90) miteinander zwangsgekoppelt und über einen gemeinsamen Vertikalantrieb (74) gegenläufig am Ständerwerk (16) vertikal verfahrbar sind,
- das vertikale Verfahren des Tragsegments derart erfolgt, dass ein oberes Ladehilfsmittel (40, 42, 44, 46) durch die Übergabeeinheit (110) greifbar ist,
- ein Greifen des oberen Ladehilfsmittels (40, 42, 44, 46) durch die Übergabeeinheit (110) erfolgt, -
das vertikale Verfahren des Tragsegments (64) und das vertikale Verfahren der Hubkonsole (66) zwangsgekoppelt und insbesondere mittels Pilgerschritt-Charakteristik erfolgt.

15. Verfahren nach Anspruch 14, ferner aufweisend:
- nach dem Absetzen des Ladehilfsmittels (40, 42, 44, 46), horizontales Verfahren der Übergabeeinheit (110) von der zweiten Seite (32) zurück zur ersten Seite (30), so dass ein weiteres Ladehilfsmittel (40, 42, 44, 46) vom Fördermittel (70) entnommen und auf dem bereits auf der Hubkonsole (66) bereitstehenden Ladehilfsmittel (40, 42, 44, 46) abgesetzt wird, und wobei die Entnahme einzelner Werkstücke (342, 344) für Bearbeitungszwecke beginnend mit dem oberen Ladehilfsmittel (40, 42, 44, 46) eines von der Hubkonsole (66) gehaltenen Stapels erfolgt, und/oder
- nach einer Bearbeitung von Werkstücken (342, 344), Ablegen der Werkstücke (342, 344) im oberen Ladehilfsmittel (40, 42, 44, 46) des von der Hubkonsole (66) gehaltenen Stapels, so dass bei vollständiger Befüllung das obere Ladehilfsmittel (40, 42, 44, 46) durch die Übergabeeinheit (110) von der zweiten Seite (32) zurück zur ersten Seite (30) verfahrbar ist, umfassend gekoppelte und einander entgegengerichtete vertikale Verfahrbewegungen des Tragsegments (64) und der Hubkonsole (66).

## Claims

1. An automation module comprising a stacking device for handling loading aids (40, 42, 44, 46) for an automated feeding of a machine tool (300), in particular for an automated workpiece change, and a handling unit (210) that is arranged to transfer workpieces (342, 344) between a loading aid (40, 42, 44, 46) provided by the stacking device (10) and the machine tool (300), the stacking device (10) comprising:
- a base (12),
- a stud frame (16) supported by the base (12),
- a first side (30) having a vertically movable support segment (64) for receiving a conveyor (70) carrying two or more loading aids (40, 42, 44, 46) that are arranged one above the other and that form a stack, and
- a second side (32) having a vertically movable lifting console (66) for receiving at least one loading aid (40, 42, 44, 46), wherein the lifting console (66) is configured to support two or more loading aids (40, 42, 44, 46) that are arranged one above the other and that form a stack,
**characterized in that**
the stud frame (16) carries at least one first vertical guide (58) and at least one second vertical guide (60),
wherein the first vertical guide (58) is assigned to the first side (30), and wherein the support segment (64) is movable along first vertical guide (58),
wherein the second vertical guide (60) is assigned to the second side (32), and wherein the lifting console (66) is movable along second vertical guide (60) at the stud frame (16),
wherein the support segment (64) and the lifting console (66) are arranged on the stud frame (16) in a manner facing away from one another, and
wherein the support segment (64) and the lifting console (66) are coupled to one another via a common coupling member (90) in a forced coupling and are vertically movable in opposite directions at the stud frame (16) via a common vertical drive (74).

2. The automation module according to claim 1, wherein the support segment (64) and the lifting console (66) are vertically movable with a pilgrim step characteristic when transferring the stack of loading aids (40, 42, 44, 46) between the first side (30) and the second side (32), and wherein the transfer of a loading aid (40, 42, 44, 46) between the first side (30) and the second side (32) is effected by a horizontal movement.

3. The automation module according to claim 1 or 2, wherein the coupling member (90) is configured as a traction means (96), and wherein the common vertical movements (220, 222) of the support segment (64) and the lifting console (66) each comprise a stroke of the same amount.

4. The automation module according to any one of claims 1-3, wherein the support segment (64) is configured to engage under and lift a rollable conveyor (70) that is configured to receive the stack of loading aids (40, 42, 44, 46) arranged one above the other, and in that the lifting console (66) has a support (102) for directly receiving the stack of loading aids (40, 42, 44, 46).

5. The automation module according to any one of claims 1-4, wherein the vertical drive (74) acts on the support segment (64) to move the support segment (64) and mediately the lifting console (66) vertically in opposite directions to each other with a step characteristic or pilgrim step characteristic.

6. The automation module according to any one of claims 1-5, wherein the stacking device (10) further comprises a transfer unit (110), which is configured to transfer a loading aid (40, 42, 44, 46) between the first side (30) and the second side (32), wherein at the stud frame (16) a transfer opening (52), which can be passed by the transfer unit (110) and can be passed by a loading aid (40, 42, 44, 46), is formed, and wherein the transfer unit (110) particularly comprises a hanging carrier (120) having a locking mechanism (122) for gripping and holding a loading aid (40, 42, 44, 46).

7. The automation module according to claim 6 wherein the common vertical drive (74) of the support segment (64) and the lifting console (66) is selectively controlled to approach a desired vertical position with respect to the transfer unit (110) for receiving or delivering a loading aid (40, 42, 44, 46).

8. The automation module according to claim 6 or 7, wherein the transfer unit (110) comprises a horizontal drive (112) that is disposed substantially on the first side (30), at least when the horizontal drive (112) has approached the first side (30).

9. The automation module according to claim 8, wherein the transfer unit (110) is positioned in a first position on the first side (30) in such a way that a loading aid (40, 42, 44, 46) supported on the second side (32) by the lifting console (66) is freely accessible from above for a handling unit (210).

10. The automation module according to any one of claims 6-9, wherein the transfer unit (110) comprises a horizontal carriage (118) that is horizontally movable in a constant vertical position.

11. The automation module according to claim 10, **characterized in that** the transfer unit (110) is horizontally telescopic and comprises a double guide (140) that is movable relative to a guide base (146) and provided with two parallel guide sections (142, 144), one of which is associated with the guide base (146), and another one of which is associated with the horizontal carriage (118), and wherein the horizontal carriage (118), the guide base (146) and the double guide (140) are particularly coupled to each other via a traction means (154) such that when the double guide (140) is moved relative to the guide base (146), the horizontal carriage (118) is moved relative to the double guide (140).

12. The automation module according to any one of claims 1-11, wherein on the first side (30) and on the second side (32) in each case two locations (280, 282; 284, 286) for receiving a stack of loading aids (40, 42, 44, 46) are formed, and wherein the two stacks can be controlled and moved independently of one another.

13. A manufacturing system comprising a machine tool (300) and an automation module (200) according to any of claims 1-12.

14. A method for feeding a machine tool (300), in particular for an automated workpiece change, comprising the following steps:
- providing a stacking device (10) comprising a base (12), a stud frame (16) supported by the base (12), a first side (30) with a vertically movable support segment (64) for receiving a conveyor (70) that carries two or more loading aids (40, 42, 44, 46) that are arranged on top of each other, a second side (32) with a vertically movable lifting console (66) for receiving at least one loading aid (40, 42, 44, 46), wherein the lifting console (66) is configured to support two or more loading aids (40, 42, 44, 46) that are arranged one above the other, and a transfer unit (110), which is configured to transfer a loading aid (40, 42, 44, 46) horizontally between the first side (30) and the second side (32),
- feeding a conveyor (70) carrying a stack of at least two loading aids (40, 42, 44, 46) that are arranged one above the other to the first side (30),
- taking up the conveyor (70) with the loading aids (40, 42, 44, 46) by the support segment (64),
- vertically moving the support segment (64),
- horizontally moving the loading aid (40, 42, 44, 46) with the transfer unit (110) from the first side (30) to the second side (32), and
- vertically moving the lifting console (66) in such a way that the loading aid (40, 42, 44, 46) can be deposited as an upper loading aid (40, 42, 44, 46) by the transfer unit (110) on the lifting console (66) or on a loading aid (40, 42, 44, 46) already provided there,
**characterized in that**
- the stud frame (16) carries at least one first vertical guide (58) and at least one second vertical guide (60),
wherein the first vertical guide (58) is assigned to the first side (30), and wherein the support segment (64) is movable along first vertical guide (58),
wherein the second vertical guide (60) is assigned to the second side (32), and wherein the lifting console (66) is movable along second vertical guide (60) at the stud frame (16),
wherein the support segment (64) and the lifting console (66) are arranged on the stud frame (16) in a manner facing away from one another, and
wherein the support segment (64) and the lifting console (66) are coupled to one another via a common coupling member (90) in a forced coupling and are vertically movable in opposite directions at the stud frame (16) via a common vertical drive (74)
- the vertical movement of the support segment (64) takes place such so that an upper loading aid (40, 42, 44, 46) can be gripped by the transfer unit (110),
- gripping the upper loading aid (40, 42, 44, 46) by the transfer unit (110),
- the vertical movement of the support segment (64) and the vertical movement of the lifting console (66) involves a forced coupling and in particular a pilgrim step characteristic.

15. The method according to claim 14, further comprising:
- after depositing the loading aid (40, 42, 44, 46), horizontally moving the transfer unit (110) from the second side (32) back to the first side (30), so that a further loading aid (40, 42, 44, 46) is taken from the conveyor (70) and deposited on the loading aid (40, 42, 44, 46) already disposed on the lifting console (66), and wherein the removal of individual workpieces (342, 344) for machining purposes takes place starting with the upper loading aid (40, 42, 44, 46) of a stack held by the lifting console (66), and/or
- after machining workpieces (342, 344), depositing the workpieces (342, 344) in the upper loading aid (40, 42, 44, 46) of the stack held by the lifting console (66), so that when completely filled, the upper loading aid (40, 42, 44, 46) is movable by the transfer unit (110) from the second side (32) back to the first side (30), comprising coupled and mutually opposing vertical movements of the support segment (64) and the lifting console (66).

## Revendications

1. Module d'automatisation comportant un dispositif d'empilage (10) pour la manipulation de moyens auxiliaires de chargement (40, 42, 44, 46) pour l'alimentation automatisée d'une machine-outil (300), en particulier pour un changement de pièce automatisé, et comportant une unité de manipulation (210) qui est conçue pour transférer des pièces (342, 344) entre un moyen auxiliaire de chargement (40, 42, 44, 46) mis à disposition par le dispositif d'empilage (10) et la machine-outil (300), dans lequel le dispositif d'empilage (10) présente les éléments suivants :
- une base (12),
- une ossature (16) qui est maintenue par la base (12),
- un premier côté (30) comportant un segment de support (64) pouvant être déplacé verticalement pour la réception d'un moyen de transport (70) qui supporte deux moyens auxiliaires de chargement (40, 42, 44, 46) ou plus disposés les uns au-dessus des autres et formant un empilement, et
- un second côté (32) comportant une console de levage (66) pouvant être déplacée verticalement pour la réception d'au moins un moyen auxiliaire de chargement (40, 42, 44, 46), dans lequel la console de levage (66) est conçue pour supporter deux moyens auxiliaires de chargement (40, 42, 44, 46) ou plus disposés les uns au-dessus des autres et formant un empilement,
**caractérisé en ce que** l'ossature (16) supporte au moins un premier guide vertical (58) et au moins un second guide vertical (60), dans lequel le premier guide vertical (58) est associé au premier côté (30), et dans lequel le segment de support (64) peut être déplacé le long du premier guide vertical (58), dans lequel le second guide vertical (60) est associé au second côté (32), et dans lequel la console de levage (66) peut être déplacée le long du second guide vertical (60) sur l'ossature (16),
dans lequel le segment de support (64) et la console de levage (66) sont disposés à l'opposé l'un de l'autre sur l'ossature (16), et
dans lequel le segment de support (64) et la console de levage (66) sont accouplés de force l'un à l'autre par l'intermédiaire d'un élément d'accouplement (90) commun et peuvent être déplacés verticalement en sens inverse sur l'ossature (16) par l'intermédiaire d'un entraînement vertical (74) commun.

2. Module d'automatisation selon la revendication 1, dans lequel le segment de support (64) et la console de levage (66) peuvent être déplacés verticalement avec une caractéristique de pas de pèlerin lors du transfert de l'empilement de moyens auxiliaires de chargement (40, 42, 44, 46) entre le premier côté (30) et le second côté (32), et dans lequel le transfert d'un moyen auxiliaire de chargement (40, 42, 44, 46) entre le premier côté (30) et le second côté (32) est effectué par un déplacement horizontal.

3. Module d'automatisation selon la revendication 1 ou 2, dans lequel l'élément d'accouplement (90) est conçu comme un moyen de traction (96), et dans lequel les déplacements verticaux (220, 222) communs du segment de support (64) et de la console de levage (66) comprennent respectivement une course de même valeur.

4. Module d'automatisation selon l'une des revendications 1 à 3, dans lequel le segment de support (64) est conçu pour saisir par le dessous et soulever un moyen de transport (70) roulant qui est conçu pour recevoir l'empilement de moyens auxiliaires de chargement (40, 42, 44, 46) disposés les uns au-dessus des autres, et en ce que la console de levage (66) présente un appui (102) pour la réception directe de l'empilement de moyens auxiliaires de chargement (40, 42, 44, 46).

5. Module d'automatisation selon l'une des revendications 1 à 4, dans lequel l'entraînement vertical (74) agit sur le segment de support (64) pour déplacer verticalement le segment de support (64) et indirectement la console de levage (66) en sens inverse l'un de l'autre avec une caractéristique de pas ou une caractéristique de pas de pèlerin.

6. Module d'automatisation selon l'une des revendications 1 à 5, dans lequel le dispositif d'empilage (10) présente en outre une unité de transfert (110) qui est conçue pour transférer un moyen auxiliaire de chargement (40, 42, 44, 46) entre le premier côté (30) et le second côté (32), dans lequel une ouverture de transfert (52) pouvant être traversée par l'unité de transfert (110) est conçue sur l'ossature (16), laquelle ouverture de transfert peut être traversée par un moyen auxiliaire de chargement (40, 42, 44, 46), et dans lequel l'unité de transfert (110) comprend en particulier un support suspendu (120) comportant un mécanisme de verrouillage (122) pour la saisie et le maintien d'un moyen auxiliaire de chargement (40, 42, 44, 46).

7. Module d'automatisation selon la revendication 6, dans lequel l'entraînement vertical (74) commun du segment de support (64) et de la console de levage (66) est commandé de manière ciblée afin d'approcher une position verticale souhaitée par rapport à l'unité de transfert (110) pour la réception ou la distribution d'un moyen auxiliaire de chargement (40, 42, 44, 46).

8. Module d'automatisation selon la revendication 6 ou 7, dans lequel l'unité de transfert (110) présente un entraînement horizontal (112) qui est disposé sensiblement sur le premier côté (30) au moins lorsque l'entraînement horizontal (112) s'est approché du premier côté (30).

9. Module d'automatisation selon la revendication 8, dans lequel l'unité de transfert (110) est positionnée dans une première position sur le premier côté (30) de telle sorte qu'un moyen auxiliaire de chargement (40, 42, 44, 46) supporté sur le second côté (32) par la console de levage (66) est librement accessible par le haut pour une unité de manipulation (210).

10. Module d'automatisation selon l'une des revendications 6 à 9, dans lequel l'unité de transfert (110) présente un chariot horizontal (118) pouvant être déplacé horizontalement dans une position verticale constante.

11. Module d'automatisation selon la revendication 10, dans lequel l'unité de transfert (110) est télescopique horizontalement et présente un double guide (140) pouvant être déplacé par rapport à une base de guide (146) et comportant deux sections de guide (142, 144) parallèles, dont l'une est associée à la base de guide (146) et une autre est associée au chariot horizontal (118), et dans lequel le chariot horizontal (118), la base de guide (146) et le double guide (140) sont accouplés entre eux, en particulier par l'intermédiaire d'un moyen de traction (154), de telle sorte que, lors d'un déplacement du double guide (140) par rapport à la base de guide (146), le chariot horizontal (118) est déplacé par rapport au double guide (140).

12. Module d'automatisation selon l'une des revendications 1 à 11, dans lequel respectivement deux emplacements (280, 282 ; 284, 286) sont conçus sur le premier côté (30) et sur le second côté (32) pour la réception d'un empilement de moyens auxiliaires de chargement (40, 42, 44, 46), et dans lequel les deux empilements peuvent être commandés et déplacés indépendamment l'un de l'autre.

13. Système de fabrication comportant une machine-outil (300) et un module d'automatisation (200) selon l'une des revendications 1 à 12.

14. Procédé pour l'alimentation d'une machine-outil (300), en particulier pour un changement de pièce automatisé, comportant les étapes suivantes :
- fourniture d'un dispositif d'empilage (10) qui présente une base (12), une ossature (16) maintenue par la base (12), un premier côté (30) comportant un segment de support (64) pouvant être déplacé verticalement pour la réception d'un moyen de transport (70) qui supporte deux moyens auxiliaires de chargement (40, 42, 44, 46) ou plus disposés les uns au-dessus des autres, un second côté (32) comportant une console de levage (66) pouvant être déplacée verticalement pour la réception d'au moins un moyen auxiliaire de chargement (40, 42, 44, 46) et conçue pour supporter deux moyens auxiliaires de chargement (40, 42, 44, 46) ou plus disposés les uns au-dessus des autres, et une unité de transfert (110) qui est conçue pour transférer horizontalement un moyen auxiliaire de chargement (40, 42, 44, 46) entre le premier côté (30) et le second côté (32),
- acheminement vers le premier côté (30) d'un moyen de transport (70) supportant un empilement d'au moins deux moyens auxiliaires de chargement (40, 42, 44, 46) disposés les uns au-dessus des autres,
- réception du moyen de transport (70) avec les moyens auxiliaires de chargement (40, 42, 44, 46) par le segment de support (64),
- déplacement vertical du segment de support (64),
- déplacement horizontal du moyen auxiliaire de chargement (40, 42, 44, 46) avec l'unité de transfert (110) du premier côté (30) vers le second côté (32), et
- déplacement vertical de la console de levage (66) de telle sorte que le moyen auxiliaire de chargement (40, 42, 44, 46) peut être déposé en tant que moyen auxiliaire de chargement supérieur (40, 42, 44, 46) par l'unité de transfert (110) sur la console de levage (66) ou sur un moyen auxiliaire de chargement (40, 42, 44, 46) qui y est déjà disponible, **caractérisé en ce que**
- l'ossature (16) supporte au moins un premier guide vertical (58) et au moins un second guide vertical (60), dans lequel le premier guide vertical (58) est associé au premier côté (30), et dans lequel le segment de support (64) peut être déplacé le long du premier guide vertical (58), dans lequel le second guide vertical (60) est associé au second côté (32), et dans lequel la console de levage (66) peut être déplacée le long du second guide vertical (60) sur l'ossature (16), dans lequel le segment de support (64) et la console de levage (66) sont disposés sur l'ossature (16) à l'opposé l'un de l'autre, et dans lequel le segment de support (64) et la console de levage (66) sont accouplés de force l'un à l'autre par l'intermédiaire d'un élément d'accouplement (90) commun et peuvent être déplacés verticalement en sens inverse sur l'ossature (16) par l'intermédiaire d'un entraînement vertical (74) commun,
- le déplacement vertical du segment de support est effectué de telle sorte qu'un moyen auxiliaire de chargement supérieur (40, 42, 44, 46) peut être saisi par l'unité de transfert (110),
- une saisie du moyen auxiliaire de chargement supérieur (40, 42, 44, 46) est effectuée par l'unité de transfert (110),
- le déplacement vertical du segment de support (64) et le déplacement vertical de la console de levage (66) sont accouplés de force et sont effectués en particulier au moyen d'une caractéristique de pas de pèlerin.

15. Procédé selon la revendication 14, présentant en outre :
- après le dépôt du moyen auxiliaire de chargement (40, 42, 44, 46), le déplacement horizontal de retour de l'unité de transfert (110) du second côté (32) vers le premier côté (30), de sorte qu'un autre moyen auxiliaire de chargement (40, 42, 44, 46) est prélevé du moyen de transport (70) et déposé sur le moyen auxiliaire de chargement (40, 42, 44, 46) déjà disponible sur la console de levage (66), et dans lequel le prélèvement de pièces (342, 344) individuelles à des fins d'usinage est effectué en commençant par le moyen auxiliaire de chargement supérieur (40, 42, 44, 46) d'un empilement maintenu par la console de levage (66), et/ou
- après un usinage de pièces (342, 344), le dépôt des pièces (342, 344) dans le moyen auxiliaire de chargement supérieur (40, 42, 44, 46) de l'empilement maintenu par la console de levage (66), de sorte que, lorsque le remplissage est complet, le moyen auxiliaire de chargement supérieur (40, 42, 44, 46) peut être déplacé par l'unité de transfert (110) du second côté (32) vers le premier côté (30), comprenant des déplacements verticaux accouplés et opposés du segment de support (64) et de la console de levage (66).
